# EUROPÄISCHE PATENTSCHRIFT

(11) **EP 1 288 691 B1**
(45) Veröffentlichungstag und Bekanntmachung des Hinweises auf die Patenterteilung: **14.02.2007**
(21) Anmeldenummer: 02023158.5
(22) Anmeldetag: 09.12.1996
(51) Int. Cl.: G02B 6/44, B23K 31/02, B23K 26/26

(54) **Vorrichtung sowie Verfahren zur Herstellung eines metallischen Röhrchens für Lichtwellenleiter**
Device and process for producing a metallic sheath for optical fibers
Dispositif et procédé de production d'une gaine métallique pour fibres optiques

(30) Priorität: 19.09.1996 DE 19638403
(43) Veröffentlichungstag der Anmeldung: 05.03.2003
(62) Teilanmeldung aus: 96946177.1
(73) Patentinhaber: NORDDEUTSCHE SEEKABELWERKE GMBH & CO. KG, 26954 Nordenham (DE)
(72) Erfinder: Wichmann, Franz-Josef, 26169 Friesoythe (DE)
(74) Vertreter: Epping - Hermann - Fischer

(56) Entgegenhaltungen:
- EP-A- 0 127 437
- EP-A- 0 279 006
- EP-A- 0 727 273
- EP-A- 0 727 274
- EP-A- 0 727 679
- CH-A- 98 121
- DE-A- 3 910 122
- DE-A- 4 003 311
- DE-A- 4 323 446
- US-A- 3 893 316
- US-A- 4 226 653
- US-A- 4 852 790
- PATENT ABSTRACTS OF JAPAN vol. 018, no. 598 (M-1704), 15. November 1994 (1994-11-15) -& JP 06 226447 A (FURUKAWA ELECTRIC CO LTD : THE), 16. August 1994 (1994-08-16)
- PATENT ABSTRACTS OF JAPAN vol. 010, no. 287 (C-375), 30. September 1986 (1986-09-30) -& JP 61 106443 A (FUJIKURA LTD), 24. Mai 1986 (1986-05-24)
- PATENT ABSTRACTS OF JAPAN vol. 011, no. 201 (P-590), 30. Juni 1987 (1987-06-30) -& JP 62 021112 A (OCEAN CABLE CO LTD), 29. Januar 1987 (1987-01-29)
- PATENT ABSTRACTS OF JAPAN vol. 1996, no. 07, 31. Juli 1996 (1996-07-31) -& JP 08 057671 A (SUMITOMO METAL IND LTD), 5. März 1996 (1996-03-05)
- PATENT ABSTRACTS OF JAPAN vol. 012, no. 018 (M-660), 20. Januar 1988 (1988-01-20) -& JP 62 176692 A (NIPPON STEEL CORP), 3. August 1987 (1987-08-03)
- PATENT ABSTRACTS OF JAPAN vol. 016, no. 247 (P-1365), 5. Juni 1992 (1992-06-05) -& JP 04 055804 A (NKK CORPORATION), 24. Februar 1992 (1992-02-24)

## Beschreibung

Die Erfindung betrifft ein Verfahren und eine Vorrichtung zur Herstellung eines mit mindestens einem Lichtwellenleiter bestücktes, metallisches Röhrchen gemäß dem Oberbegriff der Ansprüche 1 und 9 (siehe, z.B. EP-A-0 127 437).

In der Kabeltechnik werden zum Beispiel für Hochspannungs-Freileitungsseile oder Seekabel optische Übertragungselemente verwendet, deren Lichtwellenleiter von einer metallischen Ummantelung umgeben sind. Gegebenenfalls können die Lichtwellenleiter zusätzlich in eine Füllmasse im Inneren der metallischen Ummantelung eingebettet sein. Die metallische Ummantelung dient dabei insbesondere dem Zweck, die Lichtwellenleiter vor chemischen, mechanischen Beanspruchungen und/oder sonstigen störenden Einflüssen, wie zum Beispiel Umgebungsfeuchtigkeit oder Wasserstoffdiffusion zu schützen. Zur Herstellung eines solchen optischen Übertragungselementes wird ein Metallband zu einem Röhrchen geformt, mindestens ein Lichtwellenleiter und/oder Füllmasse dorthinein eingebracht und das Röhrchen verschweißt.

Die Herstellung eines solchen Lichtwellenleiter- bestückten metallischen Röhrchens kann in der Praxis aus vielfältigen Gründen erschwert sein.

So können sich in der Praxis beispielsweise Schwierigkeiten insbesondere beim Verschweißen des metallischen Röhrchens ergeben. Es besteht so zum Beispiel die Gefahr, daß es zu einer unzulässig hohen thermischen Belastung und damit einer Materialschädigung oder gar einem teilweisen Verbrennen der Füllmasse und/oder der Kunststoffbeschichtung (= Coating) der Lichtwellenleiter kommt. Weiterhin ist insbesondere der Schweißprozeß auch deshalb kritisch, weil durch die örtliche Überhitzung Wasserstoff freigesetzt werden kann. Solcher Wasserstoff kann beispielsweise aus feuchter Umgebungsluft, beim Aufschmelzen des Metalls des Röhrchens, aus der Füllmasse, aus der Kunststoffbeschichtung (= Coating) der Lichtwellenleiter, usw. ... frei werden. Würde solcher Wasserstoff gegebenenfalls mit in das Innere des fertig verschweißten, rundum dichten Röhrchens eingeschleppt werden, so würde er dort verbleiben und zu einem unerwünschten Anstieg der Übertragungsdämpfung der Lichtwellenleiter führen.

In der DE 40 03 311 A1 wird ein Metallband bereits vor oder während seiner Formgebung zu einem Röhrchen reversibel gelängt. Dazu wird das Metallband noch vor seinem eigentlichen Formvorgang mit Hilfe einer Aufwärmvorrichtung aufgeheizt. Optische Fasern werden im Bereich des sich bildenden, gelängten Schlitz-Röhrchenabschnittes im Gleichlauf mit diesen in das Schlitz-Röhrchen eingeführt. Anschließend wird das vorab gelängte Schlitz- Röhrchen mechanisch geschlossen, mit Hilfe einer Schweißeinrichtung längsverschweißt und schließlich zur Querschnittsreduzierung durch einen nachfolgenden Ziehring hindurchgezogen. Ein nachgeordneter Spannbackenabzug dient dabei dem Vorwärtstransport des Röhrchens. Anschließend wird das Röhrchen zugentlastet einer Vorratstrommel zugeführt. Bei einem derartigen Verfahren können sich Probleme insbesondere dadurch ergeben, daß das Metallband bereits vor dem eigentlichen Formvorgang reversibel gelängt wird und dann erst noch mehrere Formgebungsstufen wie z.B. Rollenwerkzeuge, eine Schweißeinrichtung sowie einen Ziehring durchläuft, bis schließlich die Formgebung für das zu fertigende Röhrchen vollendet ist. Durch diese nachträglichen Formgebungsschritte besteht insbesondere die Gefahr, daß die vorab eingestellte Längung des Metallbandes in unkontrollierter Weise mit Störgrößen beaufschlagt oder teilweise bzw. gegebenenfalls sogar ganz wieder verloren geht. Eine exakte Einstellung der Überlänge der optischen Fasern gegenüber dem metallischen Röhrchen ist somit in der Praxis erschwert.

In der EP-A-0 127 437 sind ein Verfahren und eine Vorrichtung zur Herstellung von optischen Kabeln beschrieben. Dabei wird ein Metallband zu einem Röhrchen durch Verschließen geformt, beispielsweise durch Löten oder Schweißen. Nach dem Verschließen werden ein oder mehrere Lichtwellenleiter in das Röhrchen zusammen mit einem Füllmaterial eingebracht.

In der US-A-4 226 653 ist ein Verfahren zur kontinuierlichen Herstellung eines optischen Übertragungselements beschrieben, bei dem eine lichtoptische Faser in ein rohrförmiges Gehäuse eingebracht wird. Mittels eines geheizten Wasserbades wird das Gehäuse gelängt, einer Aufbewahrungstrommel zugeführt und anschließend gekühlt.

Ein Problem der Erfindung ist es, einen Weg aufzuzeigen, wie ein mit mindestens einem Lichtwellenleiter zu bestückendes metallisches Röhrchen einwandfrei hergestellt werden kann.

Diese Aufgabe wird mit einer Vorrichtung gemäß Patentanspruch 9 und mit einem Verfahren gemäß Patentanspruch 1 gelöst.

Dadurch ist es ermöglicht, das metallische Röhrchen in zuverlässiger Weise herzustellen.

Die Erfindung betrifft ein Verfahren zur Erzeugung von Überlängen mindestens eines Lichtwellenleiters gegenüber einem ihn einschließenden metallischen Röhrchen, wobei ein Metallband zu dem Röhrchenentlang einem Formgebungsabschnitt geformt wird, und wobei die Überlängenerzeugung durch reversible Längung des Metallbandes bewirkt wird; welches dadurch gekennzeichnet ist, daß der Lichtwellenleiter erst bei oder nach Verlassen des Formgebungsabschnittes in das fertig geformte Röhrchen eingebracht wird, daß das fertig geformte Röhrchen erst nach Verlassen des Formgebungsabschnittes in einem unmittelbar nachfolgenden Längungsabschnitt aufgeheizt und reversibel gestreckt wird, und daß schließlich das Röhrchen nach Verlassen des Längungsabschnittes derart abgekühlt und entspannt wird, daß es verkürzt wird und der Lichtwellenleiter mit einer definierten Überlänge in dem sich verkürzenden metallischen Röhrchen zu liegen kommt.

Die Erfindung betrifft weiterhin eine Einrichtung zur Durchführung des Verfahrens , welche dadurch gekennzeichnet ist,daß eine Formgebungsvorrichtung vorgesehen ist, die ein Metallband zu dem Röhrchen entlang einem Formgebungsabschnitt formt, daß dem ausgangsseitigen Ende der Formgebungsvorrichtung Mittel zugeordnet sind, die den Lichtwellenleiter in das fertiggeformte Röhrchen erst bei oder nach Verlassen der Formgebungsvorrichtung einbringen, daß der Formgebungsvorrichtung unmittelbar eine Längungsvorrichtung nachgeordnet ist, die das fertige Röhrchen erst nach Verlassen der Formgebungsvorrichtung in einem unmittelbar nachfolgenden Längungsabschnitt aufheizt und reversibel streckt, und daß nach der Längungsvorrichtung eine Relaxationsvorrichtung angeordnet ist, die schließlich das Röhrchen nach Verlassen des Längungsbereiches derart abkühlt und entspannt, daß es verkürzt wird und der Lichtwellenleiter mit einer definierten Überlänge in dem verkürzten metallischen Röhrchen zu liegen kommt.

Sonstige Weiterbildungen der Erfindung sind in den Unteransprüchen wiedergegeben.

Die Erfindung und ihre Weiterbildungen werden nachfolgend anhand von Zeichnungen näher erläutert.

Es zeigen:
- Figur 1: schematisch im Längsschnitt den ersten Teilabschnitt einer Herstellungslinie zur Durchführung des erfindungsgemäßen Verfahrens,
- Figur 2: schematisch im Längsschnitt den restlichen Teil der Herstellungslinie nach Figur 1,
- Figur 3: in schematischer Darstellung eine Abwandlung der Herstellungslinie nach Figur 2,
- Figur 4: schematisch im Querschnitt die Herstellungslinie von Figur 1 im Bereich ihrer Schweißeinrichtung beim Verschweißen eines zu fertigenden, metallischen Röhrchens, und
- Figur 5: schematisch im Querschnitt ein Leitungsseil mit einem z.B. nach Figur 1 sowie 2 erfindungsgemäß hergestellten, Lichtwellenleiter- bestückten metallischen Röhrchen.

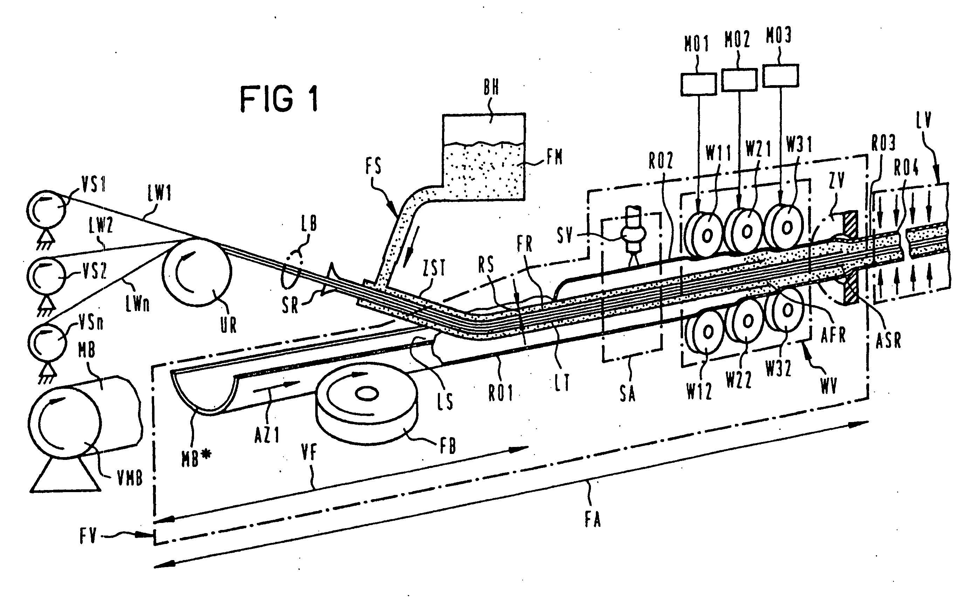

Elemente, die nach Funktion und Wirkungsweise einander entsprechen, sind in den Figuren 1 mit 5 jeweils durchgängig mit den gleichen Bezugszeichen versehen.

Die Erfindung betrifft ein Verfahren zur Erzeugung von Überlängen mindestens eines Lichtwellenleiters gegenüber einem ihn einschließenden metallischen Röhrchen, wobei ein Mettallband zu dem Röhrchen entlang einem Formgebungsabschnitt geformt wird, und wobei die Überlängenerzeugung durch reversible Längung des Metallbandes bewirkt wird.

Der Erfindung liegt die Aufgabe zugrunde, eine definiert vorgebbare Überlänge mindestens eines Lichtwellenleiters gegenüber einem ihn einschließenden, metallischen Röhrchen in zuverlässiger und präzise kontrollierbarer Weise zu erzeugen.

Dadurch, daß das metallische Röhrchen erst nach Abschluß seiner Formgebung und nicht bereits vorab reversibel gestreckt wird, wird eine besonders wirkungsvolle Überlängenerzeugung für den oder die Lichtwellenleiter ermöglicht.

Figur 1 zeigt schematisch im Längsschnitt den ersten Teilabschnitt einer Herstellungslinie zur Fertigung eines metallischen Röhrchens, das mit mindestens einem Lichtwellenleiter bestückt wird. Zweckmäßigerweise wird dabei der jeweilige Lichtwellenleiter im Röhrcheninneren in Füllmasse eingebettet. Ein solches fertiges optische Übertragungselement wird also durch ein metallische Ummantelung gebildet, in deren Inneres mindestens ein Lichtwellenleiter und/oder Füllmasse eingebracht bzw. eingeschlossen sind.

In der linken Bildhälfte von Figur 1 wird dazu ein zunächst vorzugsweise planflächiges Metallband MB, wie z.B. ein Stahl-, Edelstahl-, Kupfer-, Aluminiumband oder dergleichen von einer feststehenden Vorratsspule VMB abgezogen. Mit Hilfe einer nachfolgenden Formgebungsvorrichtung FV, die in der Figur 1 strichpunktiert eingerahmt angedeutet ist, wird dieses Metallband MB kontinuierlich zu einem metallischen Röhrchen vorgebbarer Querschnittsform umgeformt. Insbesondere wird es so umgeformt, daß es im Endzustand zylinderförmig, insbesondere etwa kreiszylinderförmig, ausgebildet ist. In der Formgebungsvorrichtung FV wird dabei das Metallband MB im wesentlichen geradlinig in Abzugsrichtung AZ1 entlang deren Formgebungsabschnitt FA vorwärtstransportiert.

Zur besseren Veranschaulichung des kontinuierlich fortschreitenden Umformungsprozesses (des ursprünglich planflächigen Metallbandes MB in ein rundum geschlossenes, zylinderförmiges, insbesondere kreiszylinderförmiges Röhrchen R03 am Ausgang des Formgebungsabschnittes FA) ist das Metallband in der Figur 1 zusätzlich in einem Zwischenzustand, d.h. in einer Vorstufe, schematisch als Halbzylinder perspektivisch eingezeichnet und mit MB* bezeichnet. Diese erste Vorformung kann entlang einem eingangsseitigen Vorformabschnitt VF zweckmäßigerweise zum Beispiel mit Hilfe von entsprechend ausgebildeten Vorformrollen durchgeführt werden, die von außen an das Metallband MB drücken und dieses in gewünschter Weise umbiegen. Der zeichnerischen Übersichtlichkeit halber ist in der Figur 1 lediglich eine einzelne Umformrolle FB schematisch eingezeichnet, die stellvertretend für weitere, entsprechende Formwerkzeuge steht. Zweckmäßigerweise ist der Umformrolle FB auf der gegenüberliegenden Seite des halbzylindrisch vorgeformten Metallbandes MB* eine zweite Umformrolle zugeordnet, die als Gegenlager für die Umformrolle FB dient und korrespondierend zur Umlaufrolle FB ausgebildet ist. Sie ist in der Figur 1 der zeichnerischen Übersichtlichkeit halber weggelassen worden. Vorzugsweise sind mehrere derartige Umformrollenpaare - mit je einer Umformrolle zu beiden Seiten der Längserstreckung des Metallbandes MB - in Längsrichtung hintereinander angeordnet. Auf diese Weise kann das Metallband MB zu einem Röhrchen RO1 vorgeformt werden, das in Abzugsrichtung AZ1 betrachtet zunächst noch einen Längsschlitz LS aufweist (= Längsschlitz- Röhrchen). Zweckmäßigerweise wird das Längsschlitz- Röhrchen RO1 in erster Näherung kreiszylinderförmig vorgeformt. Der Längsschlitz LS verläuft dabei weitgehend geradlinig in Längsrichtung. Entlang diesem Längsschlitz LS stehen sich die beiden Bandkanten des Metallbandes MB mit Abstand gegenüber. In der Figur 1 verläuft der Längsschlitz LS im wesentlichen entlang der Mittenachse auf der Oberseite des Röhrchens RO1, d.h. metallischen Ummantelung.

Gleichzeitig zum Umformprozeß des Metallbandes MB werden von rotierend angetriebenen Vorratsspulen oder Vorratstellern VS1 mit VSn Lichtwellenleiter LW1 mit LWn abgespult. Diese sind im wesentlichen parallel sowie in einer gemeinsamen Lageebene nebeneinanderliegend entlang zumindest einem Teilabschnitt des Außenumfangs eines rotierend angetriebenen Laufrades UR aufgelegt. Dieses Laufrad UR ist den Vorratsspulen VS1 mit VSn nachgeordnet. Mit Hilfe einer solchen Zuführ-/Transportvorrichtung lassen sich die Lichtwellenleiter LW1 mit LWn in vorteilhafter Weise zu einem sortiertem bzw. geordneten Bündel LB zusammenfassen, innerhalb dem die einzelnen Lichtwellenleiter LW1 mit LWn im wesentlichen die selbe Ablaufgeschwindigkeit aufweisen. Das Lichtwellenleiter- Bündel LB ist in der Figur 1 mit Hilfe einer strichpunktierten Umrahmung angedeutet. Zu dem Lichtwellenleiter-Bündel LB sind die Lichtwellenleiter LW1 mit LWn insbesondere lose, d.h. einzeln nebeneinanderliegend zusammengefaßt. Die Vorratsspulen VS1 mit VSn sowie das Laufrad UR werden insbesondere derart angetrieben, daß ein etwaig bremsender Einfluß auf die Transportbewegung der Lichtwellenleiter LW1 mit LWn aufgrund der Lagerreibung ihrer Aufhängungen möglichst aufgehoben, d.h. weitgehend vermieden wird. Vorzugsweise sind die Antriebe für die Vorratsspulen VS1 mit VSn sowie der Antrieb für das Laufrad UR derart aufeinander abgestimmt, daß die Lichtwellenleiter LW1 mit LWn möglichst ohne Zugspannung, d.h. möglichst locker, von ihren Vorratsspulen VS1 mit VSn abgespult sowie vorwärts transportiert werden können.

Die Lichtwellenleiter LW1 mit LWn des Bündels LB werden vorzugsweise geordnet nebeneinander sowie entlang einem weitgehend geradlinigen Laufweg einem langgestreckten Stützröhrchen SR zugeführt, das dem Laufrad UR nachgeordnet und längsortsfest bzw. feststehend angeordnet ist. Das Stützröhrchen SR ist vorzugsweise von oben durch den noch weit geöffneten Längsschlitz LS in das Innere des sich ausbildenden Längsschlitz- Röhrchens RO1 von der Eingangsseite her eingeführt, und zwar insbesondere bevor der Halbzylinder MB* zum annäherungsweise vollzylindrischen Röhrchen RO1 weiterverformt wird. Ab der Einführstelle des Stützröhrchens SR in das Längsschlitzröhrchen RO1 ist dieses in der Figur 1 aufgebrochen, d.h. im Längsschnitt dargestellt. Das Stützröhrchen SR weist eingangsseitig zweckmäßigerweise eine sich in Transportrichtung konisch verjüngende Eingangsöffnung auf, die trompetenartig nach außen entgegen der Einführrichtung des Lichtwellenleiter- Bündels LB absteht. Es ist entlang seinem eingangsseitigen Teilabschnitt als Zuführstutzen ZST ausgebildet, der im wesentlichen schräg in das Innere des Längsschlitzröhrchens RO1 hineinragt bzw. hineinhängt und dann derart in den Längsverlauf des Röhrchens RO1 abbiegt, daß es sich im Inneren des Röhrchens RO1 im wesentlichen geradlinig erstreckt. Es verläuft mit seinem Längsteil LT im Inneren des metallischen Röhrchens vorzugsweise bis zum ausgangsseitigen Ende des Formgebungsabschnittes FA. Dabei ist es in der Figur 1 vorzugsweise zentrisch innerhalb des zylinderförmigen Röhrchens RO1, d.h in der metallischen Ummantelung, untergebracht. Es erstreckt sich in Abzugsrichtung AZ1 betrachtet insbesondere annäherungsweise vom Längsort, an dem das Längsschlitzröhrchen RO1-gebildet ist, über den Schweißbereich einer nachfolgenden Schweißeinrichtung SV sowie über den Walzabschnitt einer weiter nachgeordneten Walzvorrichtung WV hinweg bis zum Ausgang der Formgebungsvorrichtung FV. Das mit der Schweißeinrichtung SV, insbesondere einem Laser oder Schweißelektroden, längsverschweißte Röhrchen ist dabei mit RO2 bezeichnet. Das Stützröhrchen SR dient insbesondere dem Zweck, die Lichtwellenleiter LW1 mit LWn bis zum Einführen bzw. Freigeben in das fertig geformte Röhrchen von außen rundum vor mechanischen, thermischen und/oder sonstigen Beanspruchungen zu schützen. (Das fertig geformte Röhrchen ist dabei in der Figur 1 mit R03 bezeichnet.) Das Stützröhrchen gibt außerdem den Lichtwellenleitern in vorteilhafter Weise solange eine Führung vor, bis das metallische Röhrchen in seine Endform am Ausgang des Formgebungsabschnittes FA gebracht worden ist. Erst an seinem ausgangsseitigen Ende ASR läßt es die Lichtwellenleiter frei beweglich in das fertig geformte Röhrchen R03 einlaufen. Dadurch sind seitliche, insbesondere radiale Auslenkungen oder ein laterales Ausbrechen der Lichtwellenleiter LW1 mit LWn bezüglich dem Längsverlauf der Zentralachse des Stützröhrchens SR weitgehend vermieden, so daß definierte Einlaufverhältnisse für die Lichtwellenleiter bereitgestellt sind. Die Lichtwellenleiter LW1 mit LWn folgen also dem Längsverlauf der Zentralachse des Stützröhrchens SR nach, d.h. ihnen wird ein definierter, insbesondere ein entlang der Teilabschnitte ZST, LT im wesentlichen geradliniger Wegverlauf, vorgegeben und damit eine definierte Durchlauflänge zugeordnet. Dazu weist das Stützröhrchen SR zweckmäßigerweise lediglich einen Innendurchmesser derart auf, daß die Lichtwellenleiter LW1 mit LWn nur mit wenig Spiel in ihm entlangführbar sind. Vorzugsweise ist das Lichtwellenleiter- Bündel LB höchstens mit 2/10 mm, insbesondere mit höchstens 1/10 mm Spiel im Stützröhrchen SR geführt. Eine Wellung der Lichtwellenleiter LW1 mit LWn im Inneren des Stützröhrchens SR entlang dessen Längserstreckung ist somit weitgehend vermieden. Der Innendurchmesser des Stützröhrchens SR ist vorzugsweise zwischen 0,1 und 10 mm, insbesondere zwischen 0,5 und 3 mm gewählt. Das Stützröhrchen SR erstreckt sich vorzugsweise auf einer Gesamtlänge zwischen 60 und 2000 mm.

Das Stützröhrchen SR zwingt also den Lichtwellenleitern LW1 mit LWn einen vorgebbaren, insbesondere im wesentlichen geradlinigen Bahnverlauf im Röhrchen RO1 bzw. RO2 auf, so daß eine definierte Einlauflänge für die Lichtwellenleiter LW1 mit LWn sichergestellt ist. Erst ab dem Austreten der Lichtwellenleiter LW1 mit LWn aus der ausgangsseitigen Öffnung ASR des Stützröhrchens SR ist den Lichtwellenleitern LW1 mit LWn ein sich im wesentlichen frei einstellender Bahnverlauf im Inneren des fertig verschweißten und gewalzten Röhrchens R03 ermöglicht. Das Stützröhrchen SR wirkt in vorteilhafter Weise einem seitlichen, insbesondere radialen Ausbrechen oder Ausknicken des jeweiligen Lichtwellenleiters LW1 mit LWn bezogen auf die Zentralachse des Röhrchens entgegen, da es für den jeweiligen Lichtwellenleiter einen definierten, insbesondere im wesentlichen geradlinigen Laufweg vorgibt. Es stellt also eine (bezogen auf die Zentralachse des geradlinig durchlaufenden Röhrchens RO1) lateral, insbesondere radial wirksame Abstützung für die Lichtwellenleiter LW1 mit LWn bereit. Durch die Laufwegvorgabe mit Hilfe des Stützröhrchens SR sind in vorteilhafter Weise definierte Verhältnisse zwischen der Produktionslänge des Röhrchens R03 und der eingefahrenen Länge des jeweiligen Lichtwellenleiters weitgehend sichergestellt. Dadurch, daß sich das Stützröhrchen SR im Röhrchen im wesentlichen geradlinig entlang dem Formgebungsabschnitt FA erstreckt, ist in besonders einfacher Weise eine direkte, eindeutige Zuordnung der Lauflänge des jeweiligen Lichtwellenleiters zur erzeugten Durchlauflänge des fertig geformten metallischen Röhrchens R03 bereitgestellt. Auf diese Weise ist eine besonders präzise Einstellung der Lichtwellenleiterüberlänge ermöglicht.

Um auch eine Füllmasse FM mit in das fertig geformte Röhrchen R03 einbringen zu können, ist ein weiteres Zuführröhrchen - das langgestreckte Füllröhrchen FR - vorgesehen, das in das Innere des Röhrchens RO1 von der Eingangsseite her eingeführt ist. Dieses Füllröhrchen FR ist vorzugsweise längsortsfest angebracht. Es ist zweckmäßigerweise außen um das Stützröhrchen SR herum mit Abstand derart angeordnet, daß zwischen dem Stützröhrchen SR und dem Füllröhrchen FR ein Längskanal verbleibt, insbesondere ein Ringspaltkanal gebildet ist. Mit anderen Worten ausgedrückt steckt also das Stützröhrchen SR im Füllröhrchen FR derart, daß ein Spaltfreiraum zwischen der Außenseite des Stützröhrchens SR und der Innenwand des Füllröhrchens FR zur Zufuhr von Füllmasse verbleibt. Zweckmäßigerweise wird dazu das Längsschlitz-Röhrchen RO1 mit einer solch großen Innenweite, insbesondere Innendurchmesser, vorgeformt, daß in dessem Inneren genügend Platz zum Unterbringen der Doppelanordnung von Stützröhrchen SR und Füllröhrchen FR vorhanden ist. Das Füllröhrchen FR verläuft zumindest über den Schweißbereich der Schweißeinrichtung SV hinweg. In der Figur 1 erstreckt es sich im wesentlichen geradlinig. Vorzugsweise weist das Stützröhrchen SR sowie das Füllröhrchen FR eine im wesentlichen kreiszylinderförmige Form auf. Insbesondere umgibt das Führungsröhrchen FR das Stützröhrchen SR annäherungsweise konzentrisch, so daß eine koaxiale Doppelanordnung von Stützröhrchen SR und Füllröhrchen FR gebildet ist, zwischen denen sich ein im wesentlichen kreisringförmiger Ringspaltkanal RS ergibt. In diesen Ringspalt RS zwischen dem Füllröhrchen FR und dem Stützröhrchen SR wird eingangsseitig über einen Füllstutzen FS, der mit einem Vorrats- Behälter BH verbunden ist, die Füllmasse FM eingepumpt. Als Füllmasse FM ist vorzugsweise eine thixotrope, pastenförmige, weiche Masse oder ein Gel verwendet, um das fertige, optische Übertragungselement weitgehend längswasserdicht machen zu können. Das Füllröhrchen FR ist dabei zweckmäßigerweise im Eingangsbereich des Stützröhrchens SR abgedichtet. Das ausgangsseitige Ende des Füllröhrchens FR endet in Längsrichtung betrachtet vorzugsweise vor dem ausgangsseitigen Ende des Stützröhrchens SR, das heißt das Stützröhrchen SR ragt mit seinem Ende über den Ausgang des Füllröhrchens FR hinaus. Das Füllröhrchen FR weist in Abzugsrichtung AZ1 betrachtet also eine kleinere geradlinige Längserstreckung als das Stützröhrchen SR für die Lichtwellenleiter LW1 mit LWn auf. Dadurch wird sichergestellt, daß in Abzugsrichtung AZ1 betrachtet zuerst die Füllmasse FM in das Röhrchen R02 eingebracht wird, bevor die Lichtwellenleiter LW1 mit LWn hinzugegeben werden. Auf diese Weise ist es in vorteilhafter Weise ermöglicht, die Lichtwellenleiter LW1 mit LWn von der Füllmasse FM später mit in das fertige Röhrchen R03 hineinschleppen zu lassen. Das Füllröhrchen FR erstreckt sich vorzugsweise bis etwa in die Mitte der Längserstreckung oder höchstenfalls bis zum Ausgang der Walzvorrichtung WV. Demgegenüber endet das Stützröhrchen SR in Abzugsrichtung AZ1 betrachtet vorzugsweise erst später, wie z.B. nach dem Ausgang der Walzvorrichtung WV oder erst nach einer etwaigen Ziehvorrichtung wie z.B. ZV. Das Füllröhrchen FR folgt also dem Verlauf des Stützröhrchens SR nach, endet aber bereits vor dem Ausgang ASR des Stützröhrchens SR. Mit Hilfe des Füllröhrchens FR wird die Füllmasse FM somit erst zu einem Zeitpunkt in das Röhrchen eingebracht, bevor dieses auf seine Endmaße heruntergewalzt, d.h. querschnittsreduziert worden ist. Dadurch ist sichergestellt, daß die Füllmasse FM nach Vollendung des Walzvorganges und des gegebenenfalls anschließenden Ziehvorganges das Innere des fertig geformten Röhrchens R03 im wesentlichen vollständig ausfüllt. Für das Stützröhrchen SR und/oder das Füllröhrchen FR ist zweckmäßigerweise ein Material oder eine Beschichtung hoher Temperaturfestigkeit verwendet, da das Stützröhrchen SR sowie das Füllröhrchen FR im Röhrchen RO1 unter der Schweißstelle der Schweißeinrichtung SV hinweg geführt sind. Vorzugsweise ist für das Stützröhrchen SR und/oder das Füllröhrchen FR ein Metall, insbesondere hartgezogener bzw. gehärteter Edelstahl gewählt, um die Füllmasse und/oder die Lichtwellenleiter vor mechanischen und/oder thermischen Beanspruchungen sowie sonstigen Störungen beim Einbringen in das Röhrchen zu schützen.

Besonders zweckmäßig kann es sein, dem Längsschlitz- Röhrchen RO1 vor dem Verschweißen seines Längsschlitzes LS eine Querschnittsform mit möglichst großer Innenweite, insbesondere Innendurchmesser, zu geben, um die Doppelanordnung der Zuführ- Röhrchen FR/SR auf möglichst großem Abstand von der sich ausbildenden Schweißnaht des metallischen Röhrchens R02 halten zu können. Dabei kann es besonders vorteilhaft sein, das Füllröhrchen FR sowie das in ihm gelagerte, d.h. in ihm steckende Stützröhrchen SR möglichst auf derjenigen Innenseite des Längsschlitzröhrchens anzuordnen, die dem zu verschweißenden Längsschlitz LS gegenüberliegt. Wird beispielsweise das Röhrchen RO1 - wie in Figur 1 dargestellt - von oben mit Hilfe der Schweißeinrichtung SV verschlossen, so ist es zweckmäßig, die Doppelanordnung von Füllröhrchen FR und Stützröhrchen SR entlang der um etwa 180° gegenüberliegenden Innenwand, d.h. am Boden der metallischen Ummantelung bzw. dem Röhrchen RO1 anzuordnen. Auf diese Weise kann der Abstand zwischen der Schweißeinrichtung SV und dem Füllröhrchen FR bzw. dem Stützröhrchen SR möglichst groß gehalten werden, so daß die Intensität der durch die Schweißeinrichtung SV abgegebenen Hitzestrahlung am Ort des Füllröhrchens FR sowie des Stützröhrchenes SR bereits etwas abgeklungen ist.

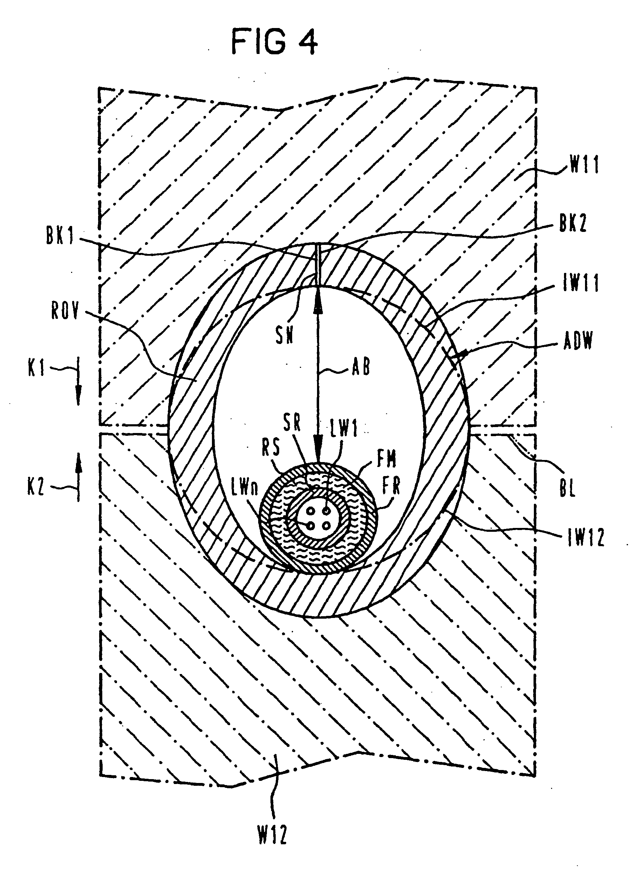

Weiterhin kann es besonders zweckmäßig sein, das Längsschlitz- Röhrchen (anstelle mit einer kreisförmigen Querschnittsform) hochovalförmig für den Schweißvorgang vorzuformen. Figur 4 zeigt eine derart hochoval vorgeformte metallische Ummantelung vergrößert im Querschnitt. Dadurch ist für den Schweißvorgang die lichte Innenweite zwischen der Doppelanordnung der Zuführ- Röhrchen SR/FR und der zu bildenden Schweißnaht gegenüber den Abstandsverhältnissen in einem kreiszylinderförmig ausgebildeten Längsschlitz- Röhrchen noch weiter vergrößert.

Zusammenfassend betrachtet wird also die lichte Innenweite, insbesondere der Innendurchmesser, des zu verschweißenden Längsschlitz-Röhrchens RO1 wesentlich größer als die lichte Innenweite, insbesondere der Innendurchmesser, des fertig gewalzten Röhrchens R03 am Ausgang der Formgebungsvorrichtung FV gewählt. Vorzugsweise hat das zu verschweißende Röhrchen RO1 einen mindestens 10 %, insbesondere um etwa 50% größeren Innendurchmesser als das fertig geformte, gewalzte Röhrchen R03. Insbesondere gelten vorstehende Aussagen auch für die maximale lichte Innenweite des metallischen Röhrchens bei hochovaler Querschnittsform gemessen zwischen dessen Ober- und Unterseite.

Das Längsschlitz- Röhrchen RO1 bzw. das fertig verschweißte Röhrchen R02 weist vorzugsweise eine Wandstärke zwischen 0,1 und 10 mm, insbesondere zwischen 0,1 und 1 mm auf. Die Spaltbreite des Ringspaltkanals RS ist vorzugsweise mindestens gleich 0,2 mm, insbesondere zwischen 0,2 und 1 mm gewählt. Das Füllröhrchens FR endet vorzugsweise vor dem Ende des Stützröhrchens SR, d.h. das Stützröhrchen SR ragt mit seinem Ende über den Ausgang des Füllröhrchens FR hinaus. Vorzugsweise ragt das Stützröhrchen um mindestens 100 mm, bevorzugt zwischen 200 und 400 mm über das Ende des Füllröhrchens hinaus. Vorzugsweise erstreckt sich das Füllröhrchen FR bis etwa in die Mitte der Walzvorrichtung WV, die entlang dem ausgangsseitigen Endabschnitt der Formgebungsvor richtung FV angeordnet ist. Das Stützröhrchen SR endet hingegen in Abzugsrichtung AZ1 betrachtet erst später, insbesondere im Ausgangsbereich der Walzvorrichtung WV bzw. einer der Walzvorrichtung WV etwaig nachgeordneten Ziehvorrichtung ZV. Mit Hilfe des Füllröhrchens FR wird also die Füllmasse FM bereits zu einem Zeitpunkt in das Röhrchen R02 hineingebracht, bevor dieses auf seinen kleineren Enddurchmesser heruntergeformt worden ist. Dadurch ist weitgehend sichergestellt, daß die Füllmasse FM nach Vollendung des Walzvorganges bzw. des nachfolgenden Ziehvorganges das fertig geformte Röhrchen vollständig im Inneren ausfüllt.

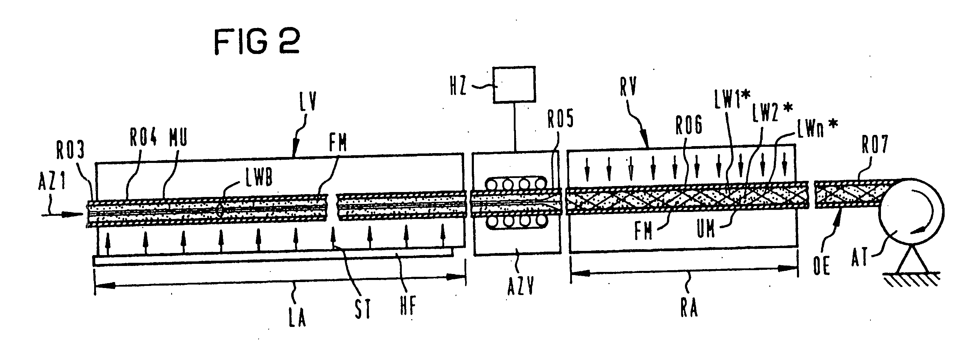

Zweckmäßigerweise weist das Stützröhrchen einen Innendurchmesser auf, der mindestens 2/10 mm kleiner als der Innendurchmesser des fertigen Röhrchens RO7 (vgl. Figur 2) am Ende der Herstellungslinie ist. Zweckmäßigerweise weist das Füllröhrchen einen Außendurchmesser auf, der mindestens 5/10 mm kleiner als der Innendurchmesser des ungewalzten, verschweißten Röhrchens R02 ist. Der Außendurchmesser des Füllröhrchens FR ist vorzugsweise zwischen 4 und 6 mm gewählt.

Figur 4 zeigt schematisch im Querschnitt das metallische Röhrchen für die Lichtwellenleiter im Bereich der Schweißeinrichtung SV im ersten Teil des Formgebungsabschnitts FA von Figur 1. Dort ist das Metallband MB zweckmäßigerweise zu einem hochovalen Röhrchen ROV vorgeformt, wobei seine Bandkanten aneinanderstoßen. Das Röhrchen ROV weist somit eine Querschnittsform auf, deren lichte Innenweite (zwischen den beiden, miteinander zu verschweißenden Bandkanten auf der Oberseite und der um etwa 180° gegenüberliegenden Röhrcheninnenwand auf der Unterseite) gegenüber der lichten Weite eines lediglich kreiszylinderförmig vorgeformten Röhrchens vergrößert ist. Die dazu erforderlichen Formwerkzeuge sind in den Figuren 1 sowie 4 der Übersichtlichkeit halber weggelassen worden. Das Füllröhrchen FR mit dem in ihm angeordneten - insbesondere konzentrisch angeordneten - Stützröhrchen SR erstreckt sich vorzugsweise entlang derjenigen Innenseite der ovalförmigen, metallischen Ummantelung ROV, die der gebildeten Schweißnaht SN des Röhrchens R02 gegenüberliegt, d.h. es läuft am Boden des Röhrchens RO1 entlang. Dadurch, daß das Füllröhrchen FR auf möglichst großem Abstand AB von der Innenfläche der Schweißnaht SN gehalten wird, wird für die Lichtwellenleiter LW1 mit LWn bereits eine erste thermische Isolierung bereitgestellt, die durch den luftgefülltem Spaltraum zwischen der Schweißnaht SN und der Außenwand des Füllröhrchenes FR gebildet ist. Das Füllröhrchen FR selbst wirkt radial nach innen als weitere thermische Isolationsschicht. Die Füllmasse FM wiederum wirkt ebenfalls als thermische Isolationsschicht. Das Stützröhrchen SR bewirkt eine weitere thermische Abschirmung für die in ihm liegenden Lichtwellenleiter LW1 mit LWn. Auf diese Weise ist für die Lichtwellenleiter LW1 mit LWn eine mehrschichtige, insbesondere vierschichtige thermische Isolationshülle und damit eine besonders wirkungsvolle thermische Abschirmung bzw. Barriere gebildet. Denn die Lichtwellenleiter LW1 mit LWn sind durch mehrere Isolierschichten von der Schweißstelle thermisch getrennt. Im einzelnen sind dies von innen nach außen betrachtet: der Mantel des Stützröhrchens SR, die Füllmasse FM im Ringspaltkanal RS zwischen dem Füllröhrchen FR und dem Stützröhrchen SR, der Mantel des Stützröhrchens SR sowie der luftgefüllte Raum AB zwischen dem Füllröhrchen FR und der Innenberandung des verschweißten Röhrchens R02. Etwaig unzulässig hohe thermische Beanspruchungen der Lichtwellenleiter LW1 mit LWn und/oder der Füllmasse FM können auf diese Weise beim Verschweißen der Längsnaht des hochoval vorgeformten Röhrchens ROV weitgehend vermieden werden.

Dem längsverschweißten Röhrchen R02 wird anschließend mit Hilfe einer der Schweißeinrichtung SV nachgeordneten Walzvorrichtung WV eine vorgebbare Querschnittsform aufgeprägt. Insbesondere kann mit Hilfe der Walzvorrichtung WV das geschweißte Röhrchen RO2 in präzise kontrollierbarer Weise im Durchmesser reduziert und gelängt werden. Dazu weist die Walzvorrichtung bzw. das Walzwerk WV mindestens eine scheibenförmige, insbesondere etwa kreiszylinderförmige Walze auf. Vorzugsweise sind beidseitig der Längserstreckung des vorzugsweise geradlinig durchlaufenden Röhrchens R02 mehrere Walzen hintereinander positioniert, die jeweils paarweise einander zugeordnet sind. Im Längsschnittbild von Figur 1 sind beispielhaft drei Walzenpaare W11/W12, W21/W22, W31/W32 angedeutet, die jeweils beidseitig der Längserstreckung des vorzugsweise geradlinig durchlaufenden Röhrchens R02 eine Walze aufweisen. Ihre Walzen sind auf der Oberseite (in Abzugsrichtung AZ1 gesehen) mit W11, W21, W31 sowie mit W12, W22, W32 auf der gegenüberliegenden Unterseite des Röhrchens R02 bezeichnet. Dabei korrespondieren jeweils zwei Walzen auf gegenüberliegenden Längsseiten des Röhrchens R02 miteinander, d.h. sie bilden jeweils ein Walzenpaar. Jede Walze ist drehbar aufgehängt. Dem jeweiligen Walzenpaar wie z.B. W11/W12, W21/W22, W31/W32 ist vorzugsweise jeweils eine eigenständige Antriebsvorrichtung wie z.B. MO1 mit M03, insbesondere ein Motor, zugeordnet, so daß ein aktiver Antrieb für jede Walze ermöglicht ist. Die Laufflächen je zweier, einander zugeordneter Walzen jedes Walzenpaares rollen auf gegenüberliegenden Teilhälften des Röhrchens R02 an dessem Außenmantel ab und üben dabei auf dessen Außenwandfläche eine vorgebbare Druckkraft ins Röhrcheninnere aus. Im Längsschnittbild von Figur 1 sind dies in Durchlaufrichtung bzw. Abzugsrichtung AZ1 betrachtet im einzelnen die Walzen der drei unmittelbar in einer Reihe hintereinander angeordneten Walzenpaare W11/W12, W21/W22, W31/W32. Jeweils zwei einander zugeordnete Walzen schließen dabei das durchlaufende Röhrchen R02 zwischen sich ein und geben für dieses eine Durchgangsöffnung bestimmter Querschnittsform vor. Vorzugsweise weisen die beiden aufeinander abrollenden Walzen des jeweiligen Walzenpaares im Querschnitt betrachtet jeweils insbesondere eine etwa halbkreisförmige Ausnehmung bzw. Innenkontur(radial nach innen zum Walzenmittelpunkt hin betrachtet) an ihrem Außenumfang, d.h. an ihrer jeweiligen Lauffläche auf. Auf diese Weise ist zwischen den Laufflächen je zweier aufeinander abrollender Walzen vorzugsweise ein etwa kreiszylinderförmiger Durchlaß bereitgestellt. Dessen Querschnittsform wird dem Röhrchen R02 vorzugsweise durch radiale Querdruckpressung aufgeprägt bzw. aufgedrückt. Dabei wird das Material der Röhrchenwand radial nach innen (bezogen auf die Zentralachse des Röhrchens) gedrückt und unter Materialfließen plastisch verformt. Die Querdruckpressung bewirkt dabei zum einen, daß das Röhrchen R02 queraxial, insbesondere radial gestaucht und dadurch sein Innen- sowie Außendurchmesser reduziert wird. Gleichzeitig kommt es durch die Querdruckpressung zu einer Materialverdrängung bzw. einem Materialfließen entlang der Längserstrekkung des Röhrchens R02, so daß dieses gelängt, d.h. verlängert wird. Insbesondere wird das Röhrchen pro Walzenpaar, d.h. allgemein ausgedrückt pro Walzvorgang, um etwa denselben Prozentsatz (bezogen auf seine Länge vor dem Walzvorgang) gelängt, wie es pro Walzvorgang in radialer Richtung (bezogen auf seinen Außendurchmesser vor dem Walzvorgang) gestaucht wird. Dadurch bleibt die Wanddicke des Röhrchens beim Walzen annäherungsweise konstant, während der Außen- sowie der Innendurchmesser des Röhrchens um etwa denselben Prozentsatz verkleinert wird. Es wird somit eine Reduzierung der torus- bzw. ringförmigen Wandquerschnittsfläche des Röhrchens R02 bei im wesentlichen konstanter Wanddicke erreicht.

In Abzugsrichtung AZ1 betrachtet wird die Weite der Durchgangsöffnung zwischen je zwei einander zugeordneten Walzen von Walzenpaar zu Walzenpaar schrittweise verkleinert, d.h. der Querschnitt der Durchgangsöffnung für das Röhrchen wird von einem Walzenpaar zum nächsten stufenweise reduziert und dadurch eine sukzessive Querschnittsreduzierung des Röhrchens R02 erreicht. Die einander zugeordneten Walzen W21, W22 sind also näher an die Zentralachse des durchlaufenden Röhrchens R02 herangerückt als das erste Walzenpaar W11/W12. Das dritte Walzenpaar W31/W32 weist gegenüber dem zweiten Walzenpaar W21/W22 schließlich eine Durchgangsöffnung auf, deren lichte Weite wiederum gegenüber dem Innendurchmesser der vorgegebenen Durchgangsöffnung des vorausgehenden, zweiten Walzenpaares W21/W22 verkleinert ist.

Die Transportgeschwindigkeiten je zweier in Abzugsrichtung AZ1 aufeinanderfolgender Walzenpaare wie z.B. W11/W12, W21/W22 werden vorzugsweise derart unterschiedlich eingestellt, daß zusätzlich zur normal eingefahrenen Lauflänge des Röhrchens R02 zumindest auch dessen durch Querdruckpressung, d.h. queraxialer Stauchung erzielte Längung aus dem Zwischenraum zwischen den beiden aufeinanderfolgenden Walzenpaaren in Abzugsrichtung AZ1 mit heraustransportiert werden kann. Besonders zweckmäßig kann es sein, die Transportgeschwindigkeit des (in Abzugsrichtung AZ1 betrachtet) jeweilig ausgangsseitigen Walzenpaares wie z.B. W21/W22 lediglich um einen solchen Prozentsatz größer als die Transportgeschwindigkeit des jeweilig eingangsseitig vorausgehenden Walzenpaares wie z.B. W11/W12 zu wählen, der annäherungsweise dem Prozentsatz der durch Querdruckpressung erreichten Verlängerung des Röhrchens R02 (gegenüber dessen ursprünglich eingefahrenen Lauflänge) entspricht. Dadurch, daß bei je zwei aufeinanderfolgenden Walzenpaaren das ausgangsseitige Walzenpaar insbesondere soviel schneller als das jeweilig vorausgehende, d.h. eingangsseitig benachbarte Walzenpaar läuft, wie dieses prozentual das durchlaufende Metallröhrchen RO2 längt, verbleibt das Röhrchen R02 beim Walzvorgang weitgehend zugspannungsneutral. Die Transportgeschwindigkeit der mehreren, hintereinandergereihten Walzenpaare wie z.B. W11/W12, W21/W22, W31/W32 nimmt also sukzessive pro Walzenpaar vorzugsweise um einen solchen Betrag zu, daß lediglich die durch Querdruckstauchung in Längsrichtung erzeugte Überlänge zusätzlich aus der Walzstrecke mit heraustransportiert werden kann. Bei einer solchen Walzung wird also das Röhrchen R02 durch den Antrieb der Walzen bevorzugt derart vorwärtstransportiert, daß jeweils lediglich die durch Querdruckpressung erzeugte Längung des Röhrchens ausgeglichen wird. Unzulässig hohe Zugspannungskräfte sowie Stauchkräfte in Längsrichtung des Metallröhrchens R02 können somit weitgehend vermieden werden.

Weiterhin ermöglichen es die angetriebenen Walzen in vorteilhafter Weise, die Transportgeschwindigkeit für das Röhrchen von einem Walzenpaar zum nächsten Walzenpaar in präzise kontrollierbarer Weise einzustellen. Dadurch ist es gegebenenfalls möglich, jeweils nur entlang der kurzen Durchlaufstrekke zwischen je zwei in Längsrichtung aufeinanderfolgenden Walzenpaaren auf das Metallröhrchen RO2 in Abzugsrichtung AZ1 präzise dosiert eine zusätzliche, vorgebbare Zugkraft auszuüben, um das Röhrchen zusätzlich zur Längung aus dem Walzvorgang (Querdruckpressung) zu längen.

Vorzugsweise sind zwischen 1 und 10 Walzenpaare, insbesondere zwischen 3 und 7 Walzenpaare zum Walzen je nach gewünschter Längung sowie Durchmesserreduzierung des Röhrchens hintereinandergereiht. Pro Walzenpaar läßt sich vorzugsweise eine Längung, d.h. Verlängerung des Röhrchens gegenüber seiner ursprünglichen Lauflänge vor dem jeweiligen Walzenpaar, zwischen 5 und 20 %, insbesondere zwischen 5 und 15% erreichen. Da die Wanddicke des Röhrchens beim Walzvorgang im wesentlichen konstant bleibt, ergibt sich anders ausgedrückt pro Walzenpaar eine Reduzierung der ringförmigen Wandquerschnittsfläche zwischen 5 und 20%, insbesondere zwischen 5 und 15% bezogen auf die Wandquerschnittsfläche vor dem jeweiligen Walzvorgang. Das Röhrchen ist nach Verlassen der Walzvorrichtung WV insgesamt vorzugsweise um 10 bis 70% seiner ursprünglich in die Walzvorrichtung WV eingefahrenen Länge gelängt.

Die Walzvorrichtung WV zeichnet sich insbesondere dadurch aus, daß entlang einer relativ kurzen Walzstrecke, bevorzugt zwischen 0,5 und 1,5 m Gesamtlänge, eine besonders effektive und zugleich materialschonende Längung und Querschnittsreduzierung des Röhrchens durchgeführt werden kann. Da die Walzen des jeweiligen Walzenpaares rotierend angetrieben sind, wird das Röhrchen RO1 zugleich während der Querdruckpressung in Abzugsrichtung AZ1 vorwärtsgeschoben, so daß ein "Festfressen" bzw. Steckenbleiben des Röhrchens im jeweiligen Walzenpaar und damit Abreißen des Röhrchens weitgehend vermieden ist. Dabei sind beim Abrollen der jeweiligen Walze an der Außenwand des Röhrchens die dort wirksam werdenden Reibungskräfte weitaus geringer als bei der Kontaktierung der Außenwand mit lediglich einem starren, ortsfesten, d.h. unbeweglich aufgehängten Ziehstein. Dadurch ist beim Walzen die Querschnittsflächenspannung in der im Querschnitt betrachtet ringförmigen Außenwand des Röhrchens (in Abzugsrichtung AZ1) gegenüber der beim Ziehen mittels eines Ziehsteines in vorteilhafter Weise verringert, so daß beim Walzen eine Spannungsrißbildung in der Röhrchenaußenwand weitgehend vermieden ist.

Gegenüber einer herkömmlichen Querschnittsreduzierung mittels "Ziehstein" zeichnet sich das Walzen somit insbesondere dadurch aus, daß unzulässig hohe Zugspannungskräfte am Röhrchen und damit Spannungsrisse oder gar ein Abreißen des Röhrchens R02 weitgehend vermieden sind.

Durch die beim Walzen erzeugte Längung wird zudem in vorteilhafter Weise erreicht, daß die Durchlaufgeschwindigkeit des Röhrchens beim Durchlaufen der Schweißanordnung SA geringer als seine Fertigungsgeschwindigkeit beim Verlassen der Walzvorrichtung ist. Insbesondere ergibt sich bei einer Durchmesserreduzierung um 100% mittels Walzen (unter Beibehaltung der Wanddicke des Röhrchens) etwa eine Verdoppelung der Ausstoßgeschwindigkeit des Röhrchens bei Verlassen der Walzvorrichtung (="Rationalisierungseffekt"). Dies erlaubt auf der einen Seite eine zuverlässige Verschweißung des Röhrchens bei relativ niedriger Fertigungsgeschwindigkeit. Auf der anderen Seite kann gleichzeitig ein hoher Fertigungsausstoß sichergestellt werden.

Da die Walzenpaare teilbar ausgebildet sind, ist ihre Handhabung in vorteilhafter Weise wesentlich vereinfacht. Weiterhin läßt sich ein und dieselbe Walzvorrichtung in vorteilhafter Weise flexibel für verschieden durchmesserstarke Röhrchen einsetzen. So können zum Beispiel für dickere Röhrchen die Walzen einzelner Walzenpaare (wie z.B. am Ende der Walzstrekke, wo der Durchgang für das Röhrchen geringer wie am Anfang ist,) der bezüglich ihres Durchmessergröße abgestuften Abfolge von Walzenpaaren weiter auseinander- oder ganz weggeklappt werden.

Eine Walzvorrichtung nach dem aufgezeigten Prinzip läßt sich in vorteilhafter Weise selbstverständlich auch in anderen als den in den Figuren 1 mit 4 gezeigten Herstellungslinien für Lichtwellenleiter- bestückte Metallröhrchen einsetzen.

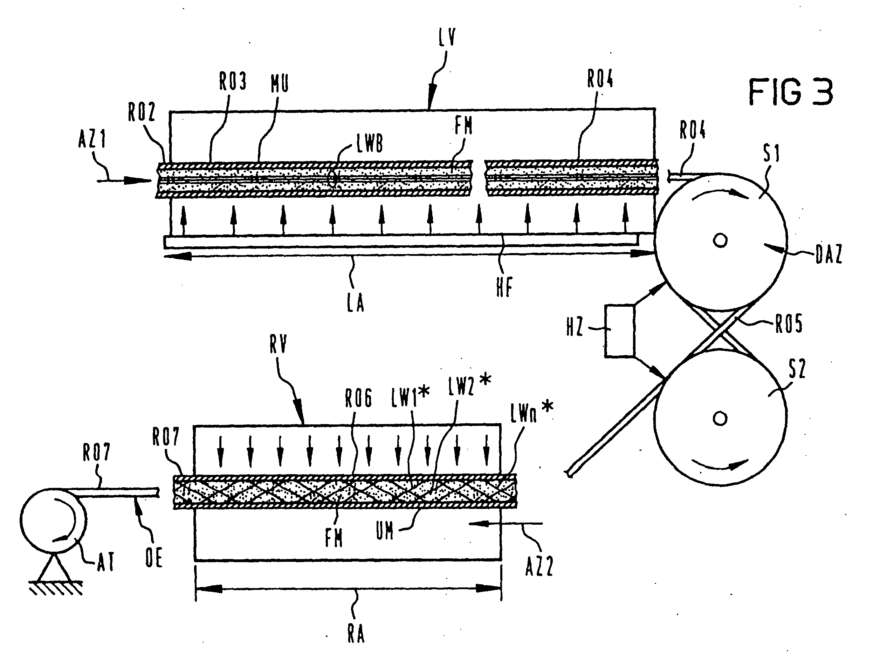

Zur besseren Veranschaulichung von Funktion und Wirkungsweise der Walzvorrichtung von Figur 1 ist im Querschnittsbild von Figur 4 beispielhaft deren Walzenpaar W11/W12, das der Schweißanordnung SA von Figur 1 nachgeordnet ist, zusätzlich strichpunktiert mit eingezeichnet. Die Reduzierwalzen W11 bzw. W12 weisen jeweils eine halbkreisförmige Innenkontur IW11 bzw. IW12 auf. Die Reduzierwalze W11 ist dabei der oberen Teilhälfte, die Reduzierwalze W12 der 180° gegenüberstehenden, unteren Teilhälfte des hochovalförmigen Röhrchens ROV zugeordnet. Die beiden Reduzierwalzen W11, W12 drücken in radialer Richtung bezogen auf die Zentralachse des (für den Schweißvorgang vorzugsweise) oval vorgeformten Röhrchens ROV aneinander, was durch zwei entgegengesetzte Pfeile K1, K2 angedeutet ist. Sie rollen im Bereich ihrer gemeinsamen Berührungslinie BL, die sich queraxial zur Abzugsrichtung AZ1 erstreckt, aufeinander ab und schließen das Röhrchen ROV formschlußartig zwischen sich ein. Die beiden Reduzierwalzen W11, W12 schließen somit aufeinander abrollend eine Durchgangsöffnung kreiszylinderförmiger Querschnittsform zwischen sich ein. Deren Querschnittsabmessungen sind gegenüber der maximalen Querschnittsbreite des hochovalförmigen Röhrchens ROV verringert. Die vorgegebene Querschnittsform dieser Durchgangsöffnung zwischen den beiden Walzen W11, W12 ist in der Figur 1 mit Hilfe eines strichpunktiert gezeichneten Kreises ADW angedeutet. Dieser Kreis ADW verläuft im wesentlichen innerhalb des Außenumfangs des ovalförmigen Röhrchens ROV. Auf diese Außenquerschnittsform des Kreises ADW wird das ovalförmige Röhrchen ROV durch die Walzen W11, W12 radial nach innen zusammengedrückt. Insbesondere ist es durch den Walzvorgang ermöglicht, die Spitzen des ovalförmigen Röhrchenes ROV abzurunden, d.h. nach innen zu drücken und somit eine plastische Verformung des ovalförmigen Röhrchens ROV in ein bevorzugt etwa kreiszylinderförmiges Röhrchen RO mit reduziertem Außendurchmesser umzuformen. Die hintereinandergereihten Walzenpaare W11/W12, W21/W22, W31/W22 weisen jeweils Durchgangsöffnungen auf, die in Abzugsrichtung AZ1 betrachtet, einen stufenweise verkleinerten Innendurchmesser aufweisen. Auf diese Weise wird das ovalförmige Röhrchen ROV stufenweise bzw. schrittweise pro Walzenpaar im Durchmesser reduziert und eine radiale Stauchung auf einen kleineren Außendurchmesser gegenüber den ursprünglichen Querschnittsmessungen vor der Walzvorrichtung WV vorgenommen. Der Walzvorgang zeichnet sich vor allem dadurch aus, daß die rotierend angetriebenen Walzen außen auf der metallischen Ummantelung bzw. dem Röhrchen ROV unter radialer Druckausübung abrollen und dabei das zwischen sich eingepreßte Röhrchen ROV in Abzugsrichtung AZ1 vorschieben bzw. weiter transportieren. Durch diese Kombination von radialem Stauchen und axialem Vorschub werden unzulässig hohe Zug- Beanspruchungen, die z.B. zu einem Abreißen des Röhrchenes ROV führen könnten, weitgehend vermieden. Die bloße Verwendung von Ziehsteinen herkömmlicher Art würde nämlich zu einem Aufrauhen oder Reißen der metallischen Ummantelung bzw. des Röhrchens führen. Da bei Ziehsteinen lediglich in axialer Richtung vom Ende der Herstellungslinie her am Röhrchen ROV gezogen werden würde, würde das Röhrchen nämlich am jeweiligen Ziehstein lokal eingeschnürt werden oder sich dort gar "Festfressen". Im Gegensatz dazu werden die Walzenpaare W11/W12, W21/W22, W31/W32 von Figur 1 mit Hilfe der zugeordneten Antriebseinrichtungungen MO1, M02, M03, insbesondere Motoren eigenständig angetrieben und eine Vorschubbewegung des Röhrchenes RO2 bewirkt. Dadurch wird zum Beispiel das ovalförmige Röhrchen ROV von Figur 3 beim Walzvorgang weit weniger zugbeansprucht, da es nicht nur allein durch eine einzelne, endseitige Abzugsvorrichtung (wie sie in der Figur 2 dargesellt ist) vorwärts transportiert wird. Da der Walzvorgang eine plastische Kaltverformung der metallischen Ummantelung bewirkt, wird diese zudem in vorteilhafter Weise verhärtet und damit besonders widerstandsfähig gegen etwaige mechanische, chemische und/oder thermische Beanspruchungen.

Gegebenenfalls kann es zweckmäßig sein, der Walzvorrichtung WV noch eine Ziehvorrichtung, insbesondere mindestens einen Ziehstein oder eine Ziehdüse nachzuordnen. Im Längsschnittbild von Figur 1 ist der Walzvorrichtung WV beispielhaft der Ziehstein ZV nachgeordnet und strichpunktiert zur Hälfte angedeutet. Er weist eine sich konusförmig verjüngende Durchgangsöffnung mit vorgebbaren Querschnittsabmessungen auf. Er dient nur noch einer abschließenden Glättung bzw. Entgratung oder abschließenden Längung des gewalzten Röhrchens R02.

Auf diese Weise ist es mit Hilfe der Walzvorrichtung ermöglicht, dem Röhrchen je nach Wahl der Innenkontur der Laufflächen seiner Walzen eine vorgebbare Querschnittsform aufzuprägen. Insbesondere läßt sich mit dem Walzvorgang, d.h. nach der Fertigformung, ein vorzugsweise etwa kreiszylinderförmiges Röhrchen R03 mit gewünschten Querschnittsabmessungen erhalten.

Für eine Querschnittsreduzierung des Röhrchens R02 mit Hilfe der Walzvorrichtung WV kann es gegebenenfalls auch bereits ausreichend sein, die jeweilige Reduzierwalze eines Walzenpaares lediglich auf einem Teilabschnitt des Außenumfangs des kalt zu verformenden Röhrchenes ROV abrollen zu lassen, der kleiner als die Hälfte des gewünschten Außenumfangs für das Röhrchen nach dem jeweiligen Walzenpaar ist. Zweckmäßig kann es gegebenenfalls auch sein, die Walzenpaare jeweils in Umfangsrichtung gegeneinander versetzt bzw. verdreht hintereinander anzuordnen. Dadurch ist am Außenumfang des Röhrchenes R02 eine im wesentlichen gleichmäßige Kaltverformung erreichbar. Bei drei hintereinander angeordneten Walzenpaaren, wie sie in Figur 1 dargestellt sind, ist es somit zweckmäßig, die Walzenpaare jeweils um 120° am Außenumfang gegeneinander verdreht zu positionieren. Selbstverständlich kann es auch zweckmäßig sein, pro Längsort mehr als zwei Walzen rings um den Außenumfang des Röhrchens R02 anzuordnen. So können beispielsweise pro Längsort vier Walzen in Form von 90°-Segmenten dem Außenumfang des Röhrchens zugeordnet sein. Dabei kann es ausreichend sein, lediglich zwei gegenüber stehende Walzen rotierend anzutreiben, während die verbleibenden beiden Walzen nicht eigens motorisch angetrieben sind und lediglich am Außenumfang des durchlaufenden Röhrchens aufgrund des bewirkten Reibungs- und/oder Formschlusses abrollen.

In der Figur 1 erstreckt sich das Füllröhrchen FR etwa bis zur Mitte der Walzvorrichtung WV und wird dort in das gewalzte Röhrchen noch vor dessen Reduzierung auf einen vorgebbaren Enddurchmesser hineingepumpt. Dadurch füllt die Füllmasse FM das Röhrchen nach dem Reduzieren auf Enddurchmesser, das heißt nach Verlassen der Walzvorrichtung WV voll aus. Das Stützröhrchen SR erstreckt sich hingegen bis etwa zum Ende des Formgebungsabschnittes FA, das heißt über das ausgangsseitige Ende der Walzvorrichtung WV hinweg und damit über das Füllröhrchenende hinaus. Dadurch ist weitgehend sichergestellt, daß die Lichtwellenleiter LW1 mit LWn von der Füllmasse FM mit derselben Geschwindigkeit wie die metallische, fertig geformte Ummantelung R03 in Abzugsrichtung AZ1 mitgeschleppt wird. Die Konsistenz der Füllmasse FM wird insbesondere derart gewählt, daß eine im wesentlichen feste Ankopplung der Lichtwellenleiter LW1 mit LWn an das Röhrchen R04 ab dem Längungsabschnitt LA erreicht wird. Vorzugsweise wird für die Füllmasse FM eine Viskosität von mindestens 10000 mP sec gewählt. Eine solch hochviskose Füllmasse FM bettet die Lichtwellenleiter LW1 mit LWn weich ein und stellt über ihre Flüssigkeitsreibung eine feste Ankopplung zur Innenwand des durchlaufenden Röhrchens R03 her. Mit anderen Worten heißt das, daß die Lichtwellenleiter LW1 mit LWn gleichlaufend, das heißt synchron zur Produktionsgeschwindigkeit des aus der Walzvorrichtung WV kommenden Röhrchens R02 mitgezogen werden, d.h. daß der jeweilige Lichtwellenleiter von der Füllmasse aufgrund deren Flüssigkeitsreibung derart mitgeschleppt wird, daß er im Längungsabschnitt im wesentlichen die gleiche Transportgeschwindigkeit wie das fertiggeformte Röhrchen aufweist. Am Ausgang des Formgebungsabschnittes FA ist also eine definierte Relativbeziehung zwischen der Länge des fertig geformten Röhrchens R03 und der einlaufenden Länge der Lichtwellenleiter LW1 mit LWn hergestellt. Das Stützröhrchen SR dient insbesondere dazu, die Lichtwellenleiter LW1 mit LWn mit einer sehr geringen Zugkraft und relativ geringer Reibung bis zum Stützröhrchenende am Ausgang der Formgebungsvorrichtung FA zu leiten. Auf die Lichtwellenleiter LW1 mit LWn wird dabei vorzugsweise höchstens eine Zugkraft von 50 cN, insbesondere zwischen 5 und 10 cN ausgeübt. Auf diese Weise laufen die Lichtwellenleiter LW1 mit LWn im wesentlichen locker, d.h. zugspannungsarm in das Röhrchen R03 ein.

Insgesamt betrachtet weist der Formgebungsabschnitt FA vorzugsweise eine Gesamtlänge zwischen 4 und 10 m, insbesondere zwischen 4 und 6 m auf.

Dem Formungsabschnitt FA folgt unmittelbar eine Längungsvorrichtung LV nach, die in der Figur 1 aus Platzgründen lediglich ausschnittsweise dargestellt ist. Ausgehend vom Ausgang des Formgebungsabschnittes FA wird das Röhrchen R03 entlang einem Längungsabschnitt LA (siehe Figur 2) geradlinig weiter transportiert. Im Längungsabschnitt LA ist das Röhrchen mit R04 bezeichnet. Dieser zweite Teil der Herstellungslinie ist in der Figur 2 schematisch dargestellt. Entlang dem Längungsabschnitt LA wird das Röhrchen R04 elastisch gestreckt. Das Röhrchen R04 wird also zugbeansprucht, wobei die Streckung des Materials zweckmäßigerweise unterhalb dessen Streckgrenze bleibt, um eine reversible Längsdehnung zu erreichen. Die elastische Streckung bzw. Dehnung des Röhrchens R04 wird dadurch erzeugt, daß das Röhrchen R03 mit einer geringeren Produktionsgeschwindigkeit in den Längungsabschnitt LA einläuft als es am Ausgang des Längungsabschnitts LA abgezogen wird. Zweckmäßigerweise wird das Röhrchen dabei entlang dem Längungsabschnitt LA aufgeheizt. Zur Aufheizung des metallischen Röhrchens RO4 ist eine Heizvorrichtung HF, insbesondere eine Hochfrequenzheizung vorgesehen. Diese gibt vorzugsweise eine Hochfrequenzstrahlung in Richtung auf das Röhrchen RO4 ab und bewirkt dadurch dessen Aufheizung. Die Hochfrequenzstrahlung ist in der Figur 2 mit Hilfe von Strahlungspfeilen ST symbolisiert. Vorzugsweise wird das Röhrchen RO4 entlang dem Längungsabschnitt LA entlang einer Strecke von mindestens 2 m, insbesondere zwischen 2 und 10 m, bevorzugt zwischen 3 und 4 m auf Zug beansprucht. Auf das Röhrchen R04 wird eine entlang dem Längsabschnitt wirksam werdende Zugspannungskraft von bevorzugt mindestens 50 N, vorzugsweise zwischen 50 und 1000 N aufgebracht. Dadurch wird das Röhrchen RO4 gelängt, das heißt verlängert. Das Röhrchen RO4 wird zweckmäßigerweise um einen solchen Betrag durch thermische Elongation gedehnt, daß sich nach Relaxation, das heißt Entspannung des Röhrchens der gewünschte Überlängenbetrag für die Lichtwellenleiter LW1 mit LWn einstellt. Denn dadurch, daß das Röhrchen RO4 entlang dem Längungsabschnitt LA geradlinig unter Zug vorwärts transportiert wird, wird sichergestellt, daß die Lichtwellenleiter im wesentlichen mit der gleichen Länge in das Röhrchen eingefahren und vorwärts transportiert werden können, wie das Röhrchen R03 aus der Formgebungsvorrichtung FV herauskommt. Die Ankopplung der Lichtwellenleiter LW1 mit LWn an die Innenwand des Röhrchenes RO4 wird dabei durch die Flüssigkeitsreibung der Füllmasse FM bewirkt. Die Ankopplung der Lichtwellenleiter LW1 mit LWn an die Vorwärtsbewegung des Röhrchens R04 kann zusätzlich oder unabhängig von der Füllmasse FM auch dadurch erreicht werden, daß die Lichtwellenleiter LW1 mit LWn auf einer so großen Länge in die metallische Ummantelung R04 eingeschlossen werden, daß aufgrund der Reibungskräfte ein Zurückschieben der Lichtwellenleiter LW1 mit LWn teilweise oder ganz verhindert wird. Auf diese Weise werden die Lichtwellenleiter LW1 mit LWn entlang dem Längungsabschnitt LA synchron zur metallischen Ummantelung R04 mit derselben Ablauflänge sowie Ablaufgeschwindigkeit mitgenommen. Sie werden dabei im wesentlichen geradlinig in das Röhrchen RO4 hineingezogen, wobei sie weitgehend zugspannungsarm, d.h. locker in das Röhrchen RO4 eingeschleppt werden. Gegebenfalls kann es dazu zweckmäßig sein, die Vorratsspulen VS1 mit VSn sowie das Laufrad UR von Figur 1 derart rotierend anzutreiben, daß ein zusätzlicher Vorschub für die Lichtwellenleiter LW1 mit LWn erzeugt wird.

Entlang dem Längungsabschnitt LA wird das Röhrchen RO4 zweckmäßigerweise auf eine Temperatur von mindestens 150°C, vorzugsweise auf etwa 200°C aufgeheizt. Zweckmäßigerweise wird es bezogen auf seine ursprünglich in den Längungsabschnitt LA eingefahrenen Länge um mindestens 2 ‰, vorzugsweise zwischen 2 und 7‰ reversibel verlängert.

In der Figur 2 ist dem Längungsabschnitt LA unmittelbar die Abzugseinrichtung AZV, insbesondere ein Raupenbandabzug oder eine Abzugsscheibe nachgeordnet. Diese Abzugseinrichtung AZV sorgt zwischen dem Längungsabschnitt LA und einem nachfolgenden Relaxationsabschnitt RA dafür, daß das Röhrchen R04 entlang dem Längungsabschnitt LA unter einer definierten Zugspannung vorwärtstransportiert und dadurch in definierter Weise gestreckt wird. Der Abzugseinrichtung AZV ist zweckmäßigerweise eine Heizvorrichtung HZ zugeordnet, so daß das Röhrchen auch noch im Bereich der Abzugseinrichtung AZV auf Übertemperatur gehalten wird. Dieser Zustand des Röhrchens ist mit RO5 bezeichnet. Vorzugsweise wird das Röhrchen im Bereich der Abzugseinrichtung AZV so aufgeheizt, daß es seine Temperatur vom Längungsabschnitt LA beibehält. Dadurch wird weitgehend vermieden, daß ein Schrumpfungsvorgang des gelängten Röhrchens RO5 entgegen seiner Abzugsrichtung AZ1 in den Längungsabschnitt LA hinein einsetzten kann. Auf diese Weise wird eine definierte, wirkungsvolle Entkopplung des Längungsabschnittes LA vom nachfolgenden Relaxationsabschnitt RA bewirkt.

Der Abzugseinrichtung AZV ist in der Figur 2 unmittelbar die Relaxationsvorrichtung RV nachgeordnet. Entlang deren Relaxations- bzw. Entspannungsabschnitt RA wird das zuvor gelängte Röhrchen RO5 derart abgekühlt und entspannt, daß es sich möglichst um seinen vorher reversibel eingestellten Längungsbetrag wieder verkürzt. Entlang diesem Relaxationsabschnitt RA wird das Röhrchen R06 in der Figur 2 geradlinig fluchtend mit dem vorausgehenden Längungsabschnitt LA weitergeführt und schließlich als fertiges optisches Übertragungselement OE auf eine Vorratstrommel AT zur Weiterverarbeitung aufgetrommelt. Gegebenenfalls kann es auch zweckmäßig sein, das fertige Röhrchen R07 direkt weiteren Verarbeitungsstufen zur Kabelherstellung zuzuführen, die in der Figur 2 der Übersichtlichkeit halber weggelassen worden sind. Das Übertragungselement OE wird vorzugsweise mit einer Geschwindigkeit zwischen 3 und 100 m/min, insbesondere zwischen 5 und 40 m/min auf die Vorratstrommel AT aufgespult. Durch die Abkühlung und Entspannung des Röhrchenes RO6 verkürzt sich das Röhrchen, das heißt es schrumpft. Da die Lichtwellenleiter LW1 mit LWn über die Flüssigkeitsreibung der Füllmasse FM an den Innenrand des schrumpfenden Röhrchens RO6 fest gekoppelt sind, werden die Lichtwellenleiter LW1 mit LWn im Röhrchen zusammengeschoben und radial ausgelenkt. Ihre seitlichen Auslenkungen werden dabei durch die Innenberandung des Röhrchens RO6 begrenzt. Insbesondere nehmen die Lichtwellenleiter einen wendelförmigen Verlauf ein, d.h. die Lichtwellenleiter weisen also eine Überlänge gegenüber dem jetzt abgekühlten Röhrchen R07 im Endzustand ein. In diesem Endzustand sind die Lichtwellenleiter mit LW1* mit Lwn* bezeichnet. Die Abkühlung des Röhrchens RO6 in der Relaxationsvorrichtung RV kann zweckmäßigerweise mit einer Wasserkühlung erfolgen. Entlang dem Relaxationsabschnitt RA wird das Röhrchen RO6 vorzugsweise auf Raumtemperatur, insbesondere auf etwa 20° C abgekühlt. Vorzugsweise wird das Röhrchen RO6 entlang dem Relaxationsabschnitt RA auf einer Strecke zwischen 0,5 und 2 m, insbesondere zwischen 1 und 1,5 m entspannt. Das Herstellungsverahren gemäß den Figuren 1 und 2 zeichnet sich vor allem dadurch aus, daß das metallische Röhrchen stets geradlinig vorwärts transportiert wird. Dadurch kann besonders effektiv die Längung des Röhrchens entlang dem Längungsabschnitt LA durch reversible Verkürzung in die Erzeugung von Überlänge der Lichtwellenleiter LW1 mit LWn umgesetzt werden.

Im fertigen Röhrchen R07 kommen die Lichtwellenleiter LW1* mit LWn* somit mit einer definierten Überlänge zu liegen. Vorzugsweise ist eine Überlänge der Lichtwellenleiter LW1* mit LWn* von mindestens 2 ‰, insbesondere zwischen 2 und 7‰ bezogen auf die Gesamtlänge des fertigen Röhrchens R07 einstellbar.

Dieses optische Übertragungselement OE läßt sich in der Kabeltechnik in vielfältiger Weise verwenden. Insbesondere kann es in Strom- oder Nachrichtenkabeln mit besonders hohen Anforderungen an die mechanische sowie thermische Stabilität, besonders bevorzugt in Hochspannungs-Freileiterseilen oder Seekabeln verwendet werden. Denn insbesondere aufgrund ihrer Überlänge lagern die Lichtwellenleiter weitgehend spannungsarm in ihrem metallischen Röhrchen, selbst bei unterschiedlichen Betriebsbedingungen.

Um die Herstellung des optischen Übertragungselementes auf einer möglichst kurzen Herstellungslinie bewerkstelligen zu können, kann es gegebenenfalls zweckmäßig sein, zwischen dem Längungsabschnitt LA und dem Relaxationsabschnitt RA eine Umlenkeinrichtung vorzusehen. In der Figur 3 ist als Umlenkeinrichtung ein Doppelscheibenabzug DAZ vorgesehen. Das gelängte Röhrchen R04 ist dabei vorzugsweise in Form einer "Acht" um die beiden Scheibenräder S1, S2 des Doppelscheibenabzugs DAZ herumgelegt. Genauso zweckmäßig kann es sein, lediglich eine einzelne, rotierend angetriebene Rolle bzw. Abzugsscheibe vorzusehen, mit der das gelängte Röhrchen R04 aus seiner ursprünglichen Abzugsrichtung AZ1 abgelenkt, insbesondere in Gegenrichtung AZ2 umgelenkt wird. Da sich das Röhrchen RO4 auf einem Teilabschnitt des Außenumfangs der Scheibenräder S1, S2 anlegt, versuchen seine Lichtwellenleiter aus der Zentralachse des Röhrchenes heraus in eine Innenbahn an den Innenrand des Röhrchens zu gelangen. Die etwaige Verlagerung der Lichtwellenleiter aus der neutralen Achse heraus auf eine solche Innenbahn würde zu nachträglichen, unerwünschten Verlusten bei der Überlänge der Lichtwellenleiter führen. Um dies ausgleichen zu können, wird zweckmäßigerweise von vornherein eine dementsprechend größere Verlängerung entlang dem Längungsabschnitt LA für das Röhrchen R03 vorgenommen. Der Tendenz der Lichtwellenleiter, sich auf eine solche Innenbahn anzulegen, wirkt weiterhin in vorteilhafter Weise die hochviskose, zähe Füllmasse aufgrund ihrer hohen Materialreibung entgegen.

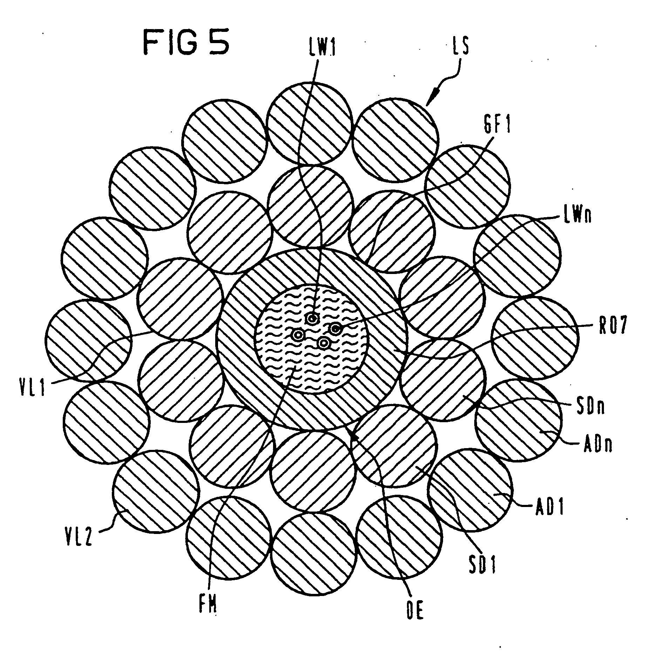

Figur 5 zeigt schematisch im Querschnitt ein Leitungsseil LS für Hochspannungsfreileitungen mit einem erfindungsgemäß hergestellten optischen Übertragungselement wie z.B. OE von Figur 2. Dieses Lichtwellenleiter- bestückte Metallröhrchen ist in der Figur 5 beispielsweise im Zentrum als Kernelement angeordnet. Über dem Röhrchen RO7 dieses optischen Übertragungselementes OE ist mindestens eine Lage von elektrisch leitenden Drähten aufgebracht. In der Figur 5 ist beispielsweise um das metallische Röhrchen R07 herum mindestens eine erste Verseillage VL1 aus Stahl- oder Stalumdrähten ST1 mit STn aufgeseilt. Darüber ist mindestens eine äußere Verseillage VL2 mit Drähten AD1 mit ADn aufgeseilt, die gegenüber der Innenlage VL1 eine höhere Leitfähigkeit aufweisen. Dafür eignen sich insbesondere Aldrey- oder Aluminiumdrähte.

Zusammenfassend ausgedrückt wird ein solches erfindungsgemäßes optisches Übertragungselement wie z.B. OE vorzugsweise mit Verfahrenschritten z.B. in folgender zeitlicher Abfolge durchgeführt:
1. Ein Metallband wie z.B. MB wird zu einem Röhrchen wie z.B. R03 entlang dem Formgebungsabschnitt FA geformt.
2. Mindestens ein Lichtwellenleiter wie z.B. LW1 wird erst bei oder nach Verlassen des Formgebungsabschnittes FA in das fertig geformte Röhrchen RO3 eingebracht. Dies wird vorzugsweise dadurch erreicht, daß das Röhrchen mit Füllmasse gefüllt wird und diese Füllmasse die Lichtwellenleiter LW1 mit LWn mit in das Röhrchen einschleppt.
3. Das fertig geformte Röhrchen RO3 wird erst nach Verlassen des Formgebungsabschnittes FA in einem unmittelbar nachfolgenden Längungsabschnitt LA aufgeheizt und reversibel gestreckt ("thermische Elongation").
4. Schließlich wird das gelängte Röhrchen R04 nach Verlassen des Längungsbereiches LA derart abgekühlt und entspannt, daß es verkürzt wird und der jeweilige Lichtwellenleiter wie z.B. LW1 mit einer definierten Überlänge in dem sich verkürzenden metallischen Röhrchen R06 zu liegen kommt.

Auf diese Weise ist es mit einer Herstellungslinie gemäß Figur 2 ermöglicht, Lichtwellenleiter vor mechanischen und chemischen Einflüssen geschützt in einem dünnen Metallröhrchen so einzuschweißen, daß sie spannungsfrei lose bei allen möglichen Betriebsbedingungen gelagert sind. Dazu werden die Lichtwellenleiter mit definierter Überlänge vorzugsweise in dem metallischen Röhrchen während des Fertigungsprozesses eingebracht. Solche Lichtwellenleiter bestückte Metallröhrchen eignen sich insbesondere zum Einbau in Hochspannungskabel, bevorzugt Hochspannungs- Leitungsseile, Seekabel sowie sonstige elektrische und/oder optische Strom- und/oder Nachrichtenkabel, an die höhere Anforderungen an die mechanische Belastbarkeit gestellt werden.

Das fertige optische Übertragungselement OE weist einen Außendurchmesser vorzugsweise zwischen 0,5 und 10 mm, insbesondere zwischen 1,5 und 8 mm, auf. Sein Innendurchmesser liegt vorzugsweise zwischen 0,3 und 9 mm, insbesondere zwischen 1,3 und 7 mm.

## Patentansprüche

1. Verfahren zur Erzeugung von Überlängen mindestens eines Lichtwellenleiters (LW1 mit LWn) gegenüber einem ihn einschließenden metallischen Röhrchen (RO7), wobei
- ein Metallband (MB) zu dem Röhrchen (RO3) entlang einem Formgebungsabschnitt (FA) geformt wird, und
- der Lichtwellenleiter (LW1 mit LWn) erst bei oder nach Verlassen des Formgebungsabschnittes (FA) in das fertig geformte Röhrchen (R03) eingebracht wird,
**dadurch gekennzeichnet, dass**
- das fertig geformte Röhrchen (R03) erst nach Verlassen des Formgebungsabschnittes (FA) in einem unmittelbar nachfolgenden Längungsabschnitt (LA) aufgeheizt und reversibel mittels einer auf das Röhrchen (R03) wirkenden Zugspannungskraft gestreckt wird, so dass die Überlängenerzeugung durch reversible Längung des aus dem Metallband (MB) geformten Röhrchens (R03) bewirkt wird, und
- schließlich das Röhrchen (R04) nach Verlassen des Längungsabschnittes (LA) einem Relaxationsabschnitt (RA) zugeführt wird und dort derart abgekühlt und entspannt wird, daß es verkürzt wird und der Lichtwellenleiter (LW1 mit LWn) mit einer definierten Überlänge in dem sich verkürzenden metallischen Röhrchen (RO6) zu liegen kommt, wobei das metallische Röhrchen stets gradlinig in dem Formgebungsabschnitt (FA), dem Längungsabschnitt (LA) und dem Relaxationsabschnitt (RA) vorwärts transportiert wird.

2. Verfahren nach Anspruch 1,
**dadurch gekennzeichnet,**
**daß** das Metallband (MB) zu einem im Querschnitt hochovalförmigen Röhrchen (ROV) im ersten Teil des Formgebungsabschnittes (FA) vorgeformt wird.

3. Verfahren nach Anspruch 1 oder 2,
**dadurch gekennzeichnet,**
**daß** das Röhrchen (R02) im Endbereich des Formgebungsabschnittes (FA) vor dem Einbringen des Lichtwellenleiters (LW1 mit LWn) derart mit Füllmasse (FM) gefüllt wird, daß der später eingebrachte Lichtwellenleiter (LW1 mit LWn) von der Füllmasse (FM) in Abzugsrichtung (AZ1) mitgeschleppt wird.

4. Verfahren nach einem der Ansprüche 1 bis 3,
**dadurch gekennzeichnet,**
**daß** das Röhrchen (R04) entlang dem Längungsabschnitt (LA) zweckmäßigerweise auf eine Temperatur von mindestens 150°C, vorzugsweise auf etwa 200 °C aufgeheizt wird.

5. Verfahren nach einem der Ansprüche 1 bis 4,
**dadurch gekennzeichnet,**
**daß** das Röhrchen (RO4) bezogen auf seine ursprünglich in den Längungsabschnitt (LA) eingefahrenen Länge um mindestens 2 ‰, vorzugsweise zwischen 2 ‰ und 7‰ reversibel verlängert wird.

6. Verfahren nach einem der Ansprüche 1 bis 5,
**dadurch gekennzeichnet,**
**daß** das Röhrchen (R04) entlang dem Längungsabschnitt (LA) entlang einer Strecke von mindestens 2 m, insbesondere zwischen 2 und 10 m, bevorzugt zwischen 3 und 4 m auf Zug beansprucht wird.

7. Verfahren nach einem der Ansprüche 1 bis 6,
**dadurch gekennzeichnet,**
**daß** auf das Röhrchen (RO4) eine entlang dem Längsabschnitt wirksam werdende Zugspannungskraft von bevorzugt mindestens 50 N, vorzugsweise zwischen 50 und 1000 N aufgebracht wird.

8. Verfahren nach einem der Ansprüche 1 bis 7,
**dadurch gekennzeichnet,**
**daß** dem Längungsabschnitt (LA) unmittelbar eine Abzugseinrichtung (AZV), die zwischen dem Längungsabschnitt (LA) und dem nachfolgenden Relaxationsabschnitt (RA) dafür sorgt, daß das Röhrchen R04 entlang dem Längungsabschnitt (LA) unter einer definierten Zugspannung vorwärts transportiert und **dadurch** in definierter Weise gestreckt wird.

9. Einrichtung zur Durchführung des Verfahrens nach einem der Ansprüche 1 mit 8, wobei
- eine Formgebungsvorrichtung (FV) vorgesehen ist, die ein Metallband (MB) zu dem Röhrchen (R03) entlang einem Formgebungsabschnitt (FA) formt,
- wobei dem ausgangsseitigen Ende der Formgebungsvorrichtung (FV) Mittel zugeordnet sind, die den Lichtwellenleiter (LW1 mit LWn) in das fertiggeformte Röhrchen (R03) erst bei oder nach Verlassen der Formgebungsvorrichtung (FV) einbringen,
**dadurch gekennzeichnet,**
- **daß** der Formgebungsvorrichtung (FV) unmittelbar eine Längungsvorrichtung (LV) nachgeordnet ist, die das fertige Röhrchen (R03) erst nach Verlassen der Formgebungsvorrichtung (FV) in einem unmittelbar nachfolgenden Längungsabschnitt (LA) aufheizt und mittels einer auf das Röhrchen (R03) wirkenden Zugspannungskraft reversibel streckt, und
- **daß** nach der Längungsvorrichtung (LV) eine Relaxationsvorrichtung (RV) angeordnet ist, die schließlich das Röhrchen (RO4) nach Verlassen des Längungsbereiches (LA) derart abkühlt und entspannt, daß es verkürzt wird und der Lichtwellenleiter (LW1 mit LWn) mit einer definierten Überlänge in dem verkürzten metallischen Röhrchen (R07) zu liegen kommt wobei der Formgebungabschnitt (FA), derLängungsabschnitt (A) und der Relaxationabschnitt (RA) so angeordnet sind, daß das metallische Röhrchen stets gradlinig in dem Formgebungsabschitt (FA), dem Längungsabschnitt (LA) und dem Relaxationabschnitt (RA) vorwärts Transportiert wird.

10. Einrichtung nach Anspruch 9,
**dadurch gekennzeichnet,**
**daß** in das Röhrchen (RO1) von der Eingangsseite der Formgebungsvorrichtung (FV) her ein langgestrecktes Füllröhrchen (FR) zur Zufuhr von Füllmasse (FM) eingeführt ist.

11. Einrichtung nach einem der Ansprüche 9 oder 11,
**dadurch gekennzeichnet,**
**daß** im eingangsseitigen Bereich der Formgebungsvorrichtung (FV) ein langgestrecktes Stützröhrchen (SR) zum Einbringen des Lichtwellenleiters (LW1 mit LWn) in das fertig geformte Röhrchen (R03) eingeführt ist.

## Claims

1. Process for producing excess lengths of at least one optical fibre (LW1 with LWn) with respect to a metallic sheath (R07) enclosing it,
- a metal strip (MB) being formed into the sheath (R03) along a shaping section (FA), and
- the optical fibre (LW1 with LWn) only being introduced into the fully formed sheath (RO3) during or after leaving the shaping section (FA),
**characterized in that**
- only after leaving the shaping section (FA), the fully formed sheath (RO3) is heated up and reversibly stretched by means of a tensile force acting on the sheath (RO3) in a directly following lengthening section (LA), so that the production of the excess length is brought about by reversible lengthening of the sheath (RO3) formed from the metal strip (MB), and
- finally, after leaving the lengthening section (LA), the sheath (R04) is fed to a relaxation section (RA) and cooled and allowed to relax there in such a way that it is shortened and the optical fibre (LW1 with LWn) comes to lie with a defined excess length in the shortening metallic sheath (RO6), the metallic sheath always being advanced in a straight line in the shaping section (FA), the lengthening section (LA) and the relaxation section (RA).

2. Process according to Claim 1, **characterized in that** the metal strip (MB) is preformed into a sheath (ROV) shaped like an upright oval in cross section in the first part of the shaping section (FA).

3. Process according to Claim 1 or 2, **characterized in that**, in the end region of the shaping section (FA), before introduction of the optical fibre (LW1 with LWn), the sheath (R02) is filled with filling compound (FM) in such a way that the optical fibre (LW1 with LWn) introduced later is entrained by the filling compound (FM) in the drawing-off direction (AZ1).

4. Process according to one of Claims 1 to 3, **characterized in that** the sheath (R04) is expediently heated along the lengthening section (LA) to a temperature of at least 150°C, preferably to approximately 200°C.

5. Process according to one of Claims 1 to 4, **characterized in that** the sheath (R04) is reversibly lengthened by at least 2%o, preferably between 2%° and 7%°, to the length with which it originally entered the lengthening section (LA).

6. Process according to one of Claims 1 to 5, **characterized in that** the sheath (R04) is subjected to tensile loading along the lengthening section (LA), along a distance of at least 2 m, in particular between 2 and 10 m, with preference between 3 and 4 m.

7. Process according to one of Claims 1 to 6, **characterized in that** a tensile force acting along the lengthening section, with preference of at least 50 N, preferably of between 50 and 1000 N, is applied to the sheath (R04).

8. Process according to one of Claims 1 to 7, **characterized in that** the lengthening section (LA) is directly followed by a drawing-off device (AZV), which ensures between the lengthening section (LA) and the following relaxation section (RA) that the sheath (R04) is advanced along the lengthening section (LA) under a defined tensile stress and is thereby stretched in a defined way.

9. Apparatus for carrying out the process according to one of Claims 1 to 8,
- a shaping device (FV) being provided, which forms a metal strip (MB) into the sheath (RO3) along a shaping section (FA),
- the end of the shaping device (FV) on the output side being assigned means which introduce the optical fibre (LW1 with LWn) into the fully formed sheath (RO3) only during or after leaving the shaping device (FV),
**characterized**
- **in that** the shaping device (FV) is directly followed by a lengthening device (LV), which heats up and reversibly stretches the finished sheath (RO3) by means of a tensile force acting on the sheath (R03) only after leaving the shaping device (FV), in a directly following lengthening section (LA), and
- **in that** arranged after the lengthening device (LV) is a relaxation device (RV), which finally cools the sheath (RO4) and allows it to relax after leaving the lengthening region (LA) in such a way that it is shortened and the optical fibre (LW1 with LWn) comes to lie with a defined excess length in the shortened metallic sheath (R07), the shaping section (FA), the lengthening section (LA) and the relaxation section (RA) being arranged in such a way that the metallic sheath is always advanced in a straight line in the shaping section (FA), the lengthening section (LA) and the relaxation section (RA).

10. Apparatus according to Claim 9, **characterized in that** an elongated filling tube (FR) for supplying filling compound (FM) is introduced into the sheath (RO1) from the input side of the shaping device (FV).

11. Apparatus according to either of Claims 9 and 10, **characterized in that** an elongated supporting tube (SR) for introducing the optical fibre (LW1 with LWn) is inserted into the fully formed sheath (RO3) in the region of the shaping device (FV) on the input side.

## Revendications

1. Procédé de production de surlongueurs d'au moins une fibre optique (LW1 avec LWn) par rapport à un petit tube (R07) métallique qui l'entoure, dans lequel
- on transforme un feuillard (MB) métallique en le petit tube (R03) le long d'un tronçon (FA) de façonnage, et
- on introduit la fibre optique (LW1 avec LWn) dans le petit tube (R03) fini de façonnage seulement ou après avoir quitté le tronçon (FA) de façonnage,
**caractérisé en ce que**
- on chauffe le petit tube (R03) fini de façonnage seulement après avoir quitté le tronçon (FA) de façonnage dans un tronçon (LA) d'allongement venant directement ensuite et on l'étire de manière réversible au moyen d'une force de traction à distance sur le petit tube (R03) de manière à provoquer la production d'une surlongueur par allongement réversible du petit tube (R03) formé sur le feuillard (MB) métallique, et
- on envoie ensuite le petit tube (R04) après avoir quitté le tronçon (LA) d'allongement à un tronçon de relaxation (RA) et on l'y refroidit et l'y détend de façon à le raccourcir et de manière à ce que la fibre optique (LW1 avec LWn) s'applique par une surlongueur définie dans le petit tube (R06) métallique raccourci, le petit tube métallique étant transporté vers l'avant toujours en ligne droite dans le tronçon (FA) de façonnage, le tronçon (LA) d'allongement et le tronçon (RA) de relaxation.

2. Procédé suivant la revendication 1,
**caractérisé**
**en ce que** l'on préforme le feuillard (MB) métallique en un petit tube (ROV) de section transversale de forme très ovale dans la première partie du tronçon (FA) de façonnage.

3. Procédé suivant la revendication 1 ou 2,
**caractérisé**
**en ce que** l'on remplit le petit tube (R02) dans la partie d'extrémité du tronçon (FA) de façonnage avant l'introduction de la fibre optique (LW1 avec LWn) d'une composition (FM) de remplissage de façon à ce que la fibre optique (LW1 avec LWn) introduite ultérieurement soit entraînée par la composition (FM) de remplissage dans la direction (AZ1) de traction.

4. Procédé suivant l'une des revendications 1 à 3,
**caractérisé**
**en ce que** l'on porte judicieusement à une température d'au moins 150°C, de préférence à environ 200°C, le petit tube (R04) le long du tronçon (LA) d'allongement.

5. Procédé suivant l'une des revendications 1 à 4,
**caractérisé**
**en ce que** l'on allonge réversiblement le petit tube (R04) d'au moins 2 %o, de préférence entre 2 ‰ et 7 ‰, rapporté à sa longueur introduite à l'origine dans le tronçon (LA) d'allongement.

6. Procédé suivant l'une des revendications 1 à 5,
**caractérisé**
**en ce que** l'on sollicite en traction le petit tube (R04) le long du tronçon (LA) d'allongement sur une longueur d'au moins 2 m, notamment comprise entre 2 et 10 m, de préférence entre 3 et 4 m.

7. Procédé suivant l'une des revendications 1 à 6,
**caractérisé**
**en ce que** l'on applique sur le petit tube (R04) une force de traction devenant efficace le long du tronçon d'allongement, de préférence d'au moins 50 N, de préférence comprise entre 50 et 1 000 N.

8. Procédé suivant l'une des revendications 1 à 7,
**caractérisé**
**en ce que** fait suite au tronçon (LA) d'allongement directement, un dispositif (AZV) d'étirage qui sert, entre le tronçon (LA) d'étirage et le tronçon (RA) de relaxation venant ensuite, à transporter vers l'avant le petit tube (R04) le long du tronçon (LA) d'étirage sous une traction définie et à l'étirer ainsi de manière définie.

9. Dispositif pour la mise en oeuvre du procédé suivant l'une des revendications 1 à 8, dans lequel
- il est prévu un dispositif (FV) de façonnage qui transforme un feuillard (MB) métallique en le petit tube (R03) le long d'un tronçon (FA) de façonnage ;
- il est associé à l'extrémité du côté de la sortie du dispositif (FV) de façonnage des moyens qui introduisent la fibre optique (LW1 avec LWn) dans le petit tube (R03) fini de façonnage seulement ou après avoir quitté le dispositif (FV) de façonnage,
**caractérisé**
- **en ce qu'**il est disposé directement en aval du dispositif (FV) de façonnage un dispositif (LV) d'allongement, qui chauffe le petit tube (R03) fini seulement après avoir quitté le dispositif (FV) de façonnage dans un tronçon (LA) d'allongement venant directement ensuite et qui l'étire réversiblement au moyen d'une force de traction agissant sur le petit tube (R03) ; et
- **en ce qu'**après le dispositif (LV) d'allongement est disposé un dispositif (RV) de relaxation, qui refroidit et détend finalement le petit tube (R04) après avoir quitté la partie (LA) d'allongement de manière à le raccourcir et de manière à ce que la fibre optique (LW1 avec LWn) vienne s'appliquer par une surlongueur définie dans le petit tube (RO7) métallique raccourci, le tronçon (FA) de façonnage, le tronçon (LA) d'allongement et le tronçon (RA) de relaxation étant disposés de façon à ce que le petit tube métallique soit transporté vers l'avant toujours en ligne droite dans le tronçon (FA) de façonnage, le tronçon (LA) d'allongement et le tronçon (RA) de relaxation.

10. Dispositif suivant la revendication 9,
**caractérisé**
**en ce qu'**un petit tube (FR) de remplissage s'étendant en longueur est introduit dans le petit tube (RO1) du côté de l'entrée du dispositif (FV) de façonnage pour l'apport d'une composition (FM) de remplissage.

11. Dispositif suivant l'une des revendications 9 ou 10,
**caractérisé**
**en ce que**, dans la partie du côté de l'entrée du dispositif (FV) de façonnage, est introduit un petit tube (SR) d'appui s'étendant en longueur pour introduire la fibre optique (LW1 avec LWn) dans le petit tube (R03) fini de façonnage.
